(19) Europäisches Patentamt
European Patent Office
Office européen des brevets

(11) **EP 3 722 611 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **20162470.7**

(22) Anmeldetag: **11.03.2020**

(51) Internationale Patentklassifikation (IPC):
*F04D 13/06* (2006.01)   *F04D 15/00* (2006.01)
*F04D 29/42* (2006.01)   *F04D 29/66* (2006.01)
*D06F 39/08* (2006.01)   *H02K 29/03* (2006.01)
*H02K 7/14* (2006.01)

(52) Gemeinsame Patentklassifikation (CPC):
**F04D 13/06; D06F 39/085; F04D 15/00;
F04D 29/428; F04D 29/669; H02K 7/14;
H02K 21/16; H02K 21/185; H02K 29/03;**
F04D 29/665; F04D 29/666

(54) **PUMPE FÜR EIN WÄSCHEPFLEGEGERÄT**

PUMP FOR A LAUNDRY CARE MACHINE

POMPE POUR UNE MACHINE DE SOINS DE LINGERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2019 DE 102019204989**

(43) Veröffentlichungstag der Anmeldung:
**14.10.2020 Patentblatt 2020/42**

(73) Patentinhaber: **BSH Hausgeräte GmbH
81739 München (DE)**

(72) Erfinder:
• **Hahn, Kevin
14548 Schwielowsee (DE)**
• **Korneluk, Pawel
10585 Berlin (DE)**
• **Römer, Raymond
10965 Berlin (DE)**

(56) Entgegenhaltungen:
**EP-A2- 2 503 153      JP-A- 2005 344 601
US-A- 5 905 355       US-A1- 2002 175 653
US-A1- 2005 232 795**

**Beschreibung**

Die vorliegende Erfindung betrifft eine Pumpe für ein Wäschepflegegerät.

In einem Wäschepflegegerät wird Waschflüssigkeit aus einem Laugenbehälter des Wäschepflegegeräts durch eine Pumpleitung mittels einer Pumpe während eines Pumpvorgangs abgepumpt, um die Waschflüssigkeit z.B. während eines Abpumpvorgangs aus dem Wäschepflegegerät abzupumpen, oder um die Waschflüssigkeit z.B. während eines Umpumpvorgangs innerhalb des Wäschepflegegeräts umzupumpen und die Wäsche erneut zu benetzen.

Für Laugenpumpenantriebe im Haushaltgeräte-Markt ist keine Abstimmung des eingebrachten Drehmoments des Antriebs mit dem hydraulischen Abtriebsdrehmoment vorgesehen. Die rotatorische Positionierung zwischen dem magnetisierten Rotor bzw. dem Stator des Antriebs und dem Laufrad der Laugenpumpe wird in der Regel völlig willkürlich vorgenommen. Somit erfolgt die rotatorische Positionierung zwischen Antrieb und dem Pumpengehäuse in der Regel nur nach fertigungstechnischen Gesichtspunkten, wie zum Beispiel die Festlegung der Entformungswege eines Kunststoff-Spritzguss-Werkzeugs des Pumpengehäuses. Damit ist die elektrische Auslegung des Antriebs nicht an die hydraulische Auslegung der Pumpe angepasst und es kann zu suboptimaler Drehmomentübertragung kommen. So können beispielsweise zeitliche Drehmomentenverläufe entstehen, welche sich nachteilig auf die Lebensdauer der Pumpe und insbesondere des Antriebs auswirken. Ferner reduziert sich dadurch der Wirkungsgrad der Pumpe, so dass sie nicht energieeffizient betrieben werden kann.

Die Veröffentlichungen JP 2005 344601 A und US 2005/232795 A1 dokumentieren den technischen Hintergrund der Erfindung.

Es ist die der Erfindung zugrundeliegende Aufgabe, ein Konzept für ein flüssigkeitsführendes Haushaltsgerät wie zum Beispiel ein Wäschepflegegerät mit einer Pumpe anzugeben, welche mit einem möglichst hohen Wirkungsgrad betrieben werden soll.

Insbesondere ist es die Aufgabe der Erfindung, eine hydraulische Auslegung der Pumpe an eine elektrische Auslegung eines Pumpenantriebs anzupassen, insbesondere an den antriebsseitig eingebrachten drehwinkelabhängigen Drehmomentverlauf anzupassen.

Diese Aufgabe wird durch eine Pumpe nach Anspruch 1 gelöst. Vorteilhafte Ausführungsformen sind Gegenstand der abhängigen Ansprüche, der Beschreibung und der Zeichnungen.

Eine wesentliche Idee der Erfindung besteht darin, das eingebrachte zeitlich unterschiedliche Antriebsdrehmoment des Antriebs genau auf den entsprechenden Lastfall der Laugenpumpe abzustimmen, d.h. die Kopplung von hydraulischem und elektrischem Lastfall zur konstruktiven Interferenz hin zu synchronisieren.

Dies erfolgt durch eine Abstimmung zwischen der hydraulischen Auslegung des Pumpenlaufrades in Interferenz mit dem Pumpengehäuse und der elektrischen Auslegung des Pumpenantriebs. So kann die Pumpe beispielsweise derart entworfen werden, dass die Auswahl der Polpaare des Antriebs mit genau der Anzahl oder zumindest mit dem ganzen Vielfachen der Pumpenlaufrad-Schaufelanzahl übereinstimmt, damit sich das eingebrachte Drehmoment des Antriebs und das periodische Verhalten des Abtriebsdrehmoments zeitlich decken bzw. zumindest zeitweise kompensieren. Das bedeutet, immer wenn der Antrieb konstruktiv bedingt eine Drehmomentspitze ausbildet, ist auch lastseitig eine hydraulische Erhöhung des Abtriebsdrehmoments vorhanden.

Das Abtriebsdrehmoment bezeichnet im Allgemeinen die Drehkraftwirkung als Drehmoment in Nm an der Abtriebswelle eines Getriebes oder eines Antriebs. Das Abtriebsmoment ist über den Wirkungsgrad und eine potentielle Getriebeübersetzung mit dem erforderlichen Antriebsdrehmoment verbunden. Bei den hier vorgestellten Pumpen bezieht sich das Abtriebsdrehmoment auf das durch den Antrieb über das Laufrad auf das Fluid übertragene (hydraulische) Drehmoment, welches auf Grund von Druck-Interferenzen zwischen dem ruhenden Pumpengehäuse und dem rotierenden Pumpenlaufrad zeitlich, periodisch variiert.

Gemäß einem ersten Aspekt wird die erfindungsgemäße Aufgabe durch eine Pumpe für ein Wäschepflegegerät gelöst, die Pumpe umfassend: eine Pumpensaugkammer mit Fluideinlass (Pumpensaugstutzen) und Fluidauslass (Pumpendruckstutzen) an einer Pumpendruckkammer; ein Pumpenlaufrad mit Laufradschaufeln, welches ausgebildet ist, das Fluid von dem Fluideinlass zu dem Fluidauslass zu fördern, wobei die Pumpendruckkammer an dem Fluidauslass eine konstruktive Singularität, die sogenannte Gehäusezunge - der Übergangsbereich zwischen Pumpendruckkammer und Pumpendruckstutzen, aufweist, wobei bei einer Vorbeibewegung einer jeweiligen Laufradschaufel an der beschriebenen Singularität eine Druckspitze im Fluid - zwischen Pumpenlaufrad und Pumpengehäuse - entsteht und somit eine zeitliche Abtriebsdrehmomentenspitze generiert; einen elektrischen mehrphasigen und damit drehzahlflexiblen Pumpenantrieb mit einem mit elektrischen, statischen Feldwicklungen ausgestatteten Stator zum Aufbau eines rotierenden Magnetfeldes zum Antreiben eines innerhalb des Stators oder allgemein bezüglich des Stators oder gegenüber dem Stator frei rotierbaren magnetischen Rotors, der ausgebildet ist, das Pumpenlaufrad anzutreiben, wobei ein Drehmoment auf den Rotor einwirkt, das abhängig von einem Drehwinkel des Rotors bzw. Laufrades in Bezug auf die Wicklungen des Stators eine periodische Drehmomenten-Schwankung aufweist, wobei der Rotor mit dem Pumpenlaufrad konstruktiv durch i.d.R. eine Laufradwelle gekoppelt ist, wobei die Kopplung ausgebildet ist, bei einem Drehwinkel des Rotors, bei welchem eine Spitze des Antriebs-Drehmoments auftritt, eine Stellung des Pumpenlaufrads zu bewirken, bei der die Druckspitze und im Fluid somit ein Abtriebsdrehmomentenmaximum entsteht. Die Laufradschaufeln sind stoffschlüssig mit dem Laufrad verbunden und können somit nicht frei rotieren, sondern nur gemeinsam mit dem Laufrad in Rotation versetzt werden.

Dadurch wird der technische Vorteil erreicht, dass die Pumpen-Einheit, bestehend aus Strömungsmaschine und Antrieb, mit einem hohen Gesamtwirkungsgrad betrieben werden kann. Insbesondere ist die hydraulische Auslegung der Pumpe an die elektrische Auslegung des Pumpenantriebs angepasst, insbesondere an den antriebsseitig eingebrachten drehwinkelabhängigen Antriebs-Drehmomentverlauf, wodurch der Wirkungsgrad der gesamten Komponente - der Pumpen-Einheit - sich erhöht. Bestehen bei der Pumpenauslegung nur geringe Freiheitsgrad hinsichtlich Laufrad- und Gehäuseauslegung kann auch umgekehrt die Antrieb-Topologie so gestaltet werden, dass damit Auslegung des Antriebs auf die Pumpenauslegung abgestimmt wird.

So wird also entweder das hydraulische Abtriebsdrehmoment der Strömungsmaschine auf das eingebrachte Antriebsdrehmoment des Motors angepasst, oder halt genau umgekehrt.

Ferner wird der technische Vorteil erreicht, dass das Wäschepflegegerät einen besonders vorteilhaften Rundlauf der Antriebs-Laugenpumpen-Einheit aufweist, da der Abtrieb entsprechend an den Antrieb angepasst ist. Der zeitlich und örtlich eingebrachte, antriebsseitige Leistungsbedarf ist stets an den abtriebsseitigen Leistungsbedarf angepasst, dadurch kann der Antrieb mit weniger Leistungsreserven ausgestattet sein, als wenn die Drehmomentenwelligkeit zwischen Antrieb und Abtrieb nicht aufeinander abgestimmt sind. Ferner muss ein Kompromiss zwischen Drehmomentwelligkeit und Antriebsleistung bei der Pumpenauslegung weniger eingehalten werden, sodass die Ausnutzung des Antriebs besser gestaltet werden kann. Dies geht damit einher, dass der wellige Anteil zusammen mit dem konstanten Anteil an den Lastfall angepasst werden muss. D.h. es kommt zu einer Kostensenkung oder zu einer Wirkungsgradoptimierung oder Leistungssteigerung bei gleichen Kosten. Die Antriebsregelung, insbesondere bei der permanenterregten Synchronmaschine, kann dann mit einer entsprechenden Anpassung der Antriebs- und Abtriebs-Drehmomente einfacher ausfallen, da der Antrieb lastseitig auf den Abtrieb oder eben genau umgekehrt eingestellt ist. Ferner fallen durch die Drehmomentanpassung zwischen Antrieb und Abtrieb die lastwechselbedingten Geräusche geringer aus oder können teilweise ganz vermieden werden.

Unter einem Flüssigkeit führenden Haushaltsgerät mit Pumpfunktion wird ein Gerät verstanden, welches z.B. zur Wäschepflege eingesetzt wird, wie z.B. eine Waschmaschine oder ein Wäschetrockner. Insbesondere wird unter solch einem Wäschepflegegerät ein Haushaltswäschepflegegerät verstanden. Also ein Wäschepflegegerät, welches im Rahmen der Haushaltsführung verwendet wird, und mit dem Wäsche in haushaltsüblichen Mengen behandelt wird. Auch in anderen Haushaltsgeräten werden heutzutage Pumpfunktionalitäten verwendet. So sind Herde mit Dampfgarsystemen ausgestattet, die z.B. auch über elektrisch angetriebene Kreiselpumpen verfügen oder Geschirrspülmaschinen sind mit elektrisch angetriebenen Zirkulations- sowie Entleerungspumpe ausgestattet oder Kühlschränke sind mit einem Hauswasseranschluss versehen und bieten in der Beladungstür eine Eiswürfelerstellung an, für die auch eine elektrisch angetriebene Kreiselpumpe zum Einsatz kommen kann.

In einer vorteilhaften Ausführungsform des Flüssigkeit führenden Haushaltsgeräts, verdeutlicht hier am Wäschepflegegerät, ist die mechanische Kopplung ausgebildet, die Stellung des Pumpenlaufrads basierend auf einer Wicklungsanordnung der Wicklungen bzw. Spulen des Stators zu bewirken.

Dadurch wird der technische Vorteil erreicht, dass durch die Wicklungsanzahl und Wicklungsanordnung bzw. Statorzähneanordnung der Wicklungen des Stators sich das rotierende Magnetfeld verändern bzw. initial verschieben lässt. Es kann somit eine solche Wicklungsanordnung gewählt bzw. im Design des Antriebs festgelegt werden, welches zu einer Anpassung an die Druckspitzen, welche hier z.B. durch das Pumpenlaufrad verursacht werden können, führt. Damit lässt sich der Gesamtwirkungsgrad der Pumpe steigern.

In einer vorteilhaften Ausführungsform des Flüssigkeit führenden Haushaltsgeräts bzw. des Wäschepflegegeräts ist die Kopplung ausgebildet, die Stellung des Pumpenlaufrads basierend auf einer Anzahl von magnetischen Polen, über die der Rotor verfügt und/oder einer Anzahl von Zähnen und Strängen, über die der Stator verfügt, zu bewirken.

Dadurch wird der technische Vorteil erreicht, dass durch die Anzahl von Magneten, mit denen der Rotor ausgestattet ist und/oder die Anzahl der Wicklungen des Stators sich der magnetische Fluss innerhalb des Antriebs verändern lässt. Es kann somit eine solche Anzahl Magnete bzw. Wicklungen gewählt werden bzw. im Design des Antriebs festgelegt werden, welche zu einer Anpassung an den abtriebsseitigen, zeitlichen Drehmomentenverlauf hier in diesem Anwendungsbeispiel die Druckspitzen, welche durch das Pumpenlaufrad verursacht werden, führt. Damit lässt sich der systemische Wirkungsgrad von Antrieb und Strömungsmaschine - der gesamten Pumpe steigern.

In einer vorteilhaften Ausführungsform des Flüssigkeit führenden Haushaltsgeräts bzw. des Wäschepflegegeräts weist der Stator eine Mehrzahl von Zähnen auf, auf welche die Wicklungen aufgebracht sind, und die Kopplung ist ausgebildet, die Stellung des Pumpenlaufrads basierend auf einer Form und Anzahl der Zähne des Stators und/oder einer Form und Anzahl der Laufradschaufeln des Pumpenlaufrads zu bewirken.

Dadurch wird der technische Vorteil erreicht, dass durch die Anzahl und Form der Zähne des Stators sich der magnetische Fluss innerhalb des Antriebs verändern lässt. Ferner lässt sich durch die Anzahl und Form der Laufradschaufeln des Pumpenlaufrads, sowie Anzahl und Form von interferierenden, konstruktiven Pumpengehäusemerkmalen der zeitliche Druckverlauf mit einer Laufradrotation im Fluid verändern. Es kann somit eine solche Anzahl an Zähnen des Stators und/oder eine solche Form der Laufradschaufeln bestimmt oder vorgegeben werden, bei welchen es zu einer Anpassung der Drehmomentwelligkeit an die Druckspitzen im Fluid kommt. Somit lässt sich der Wirkungsgrad des Systems und somit der gesamten Pumpe mit Antrieb und Strömungsmaschine steigern.

Erfindungsgemäß weist die Kopplung eine Fügestelle zwischen dem Rotor und dem Pumpenlaufrad auf, welche entsprechend einer vorkonfigurierten Lagepositionierung ausgebildet ist.

Dadurch wird der technische Vorteil erreicht, dass Rotor und Pumpenlaufrad über die Fügestelle entsprechend einer vorkonfigurierten, rotatorischen Lagepositionierung gekoppelt sind, und zwar derart, dass die Druckspitzen im Fluid - also zwischen Pumpenlaufrad und Pumpengehäuse - an die Drehmomentspitzen des Antriebs angepasst sind. Damit lässt sich der Wirkungsgrad der gesamten Pumpe erhöhen und es werden die bereits oben beschriebenen Vorteile realisiert.

In einer vorteilhaften Ausführungsform des Flüssigkeit führenden Haushaltsgeräts bzw. des Wäschepflegegeräts basiert die Kopplung auf einer Anzahl an Polpaaren des elektrischen Pumpenantriebs und einer Anzahl von Laufradschaufeln des Pumpenlaufrads.

Dadurch wird der technische Vorteil erreicht, dass die Anzahl an Polpaaren an die Anzahl der Laufradschaufeln angepasst werden kann bzw. sollte, so dass bei jedem Vorbeilauf einer Laufradschaufel an der Pumpengehäuse-Singularität gerade ein Maximum in der Drehmomentschwankung abtriebsseitig auftritt. Damit lässt sich der Wirkungsgrad der gesamten Pumpe erhöhen und es werden die bereits oben beschriebenen Vorteile realisiert.

In einer vorteilhaften Ausführungsform des Flüssigkeit führenden Haushaltsgeräts bzw. des Wäschepflegegeräts stimmt die Anzahl an Polpaaren mit der Anzahl von Laufradschaufeln oder einem ganzzahligen Vielfachen der Anzahl der Laufradschaufeln überein.

Dadurch wird der technische Vorteil erreicht, dass bei jedem Vorbeilauf einer Laufradschaufel an der bereits beschriebenen, konstruktiven Pumpengehäuse-Singularität zumindest ein Maximum in der zeitlichen Drehmomentschwankung auftritt. Damit lässt sich der Gesamtwirkungsgrad der Pumpe erhöhen und es werden die bereits oben beschriebenen Vorteile realisiert.

In einer vorteilhaften Ausführungsform des Flüssigkeit führenden Haushaltsgeräts bzw. des Wäschepflegegeräts ist die Kopplung ausgebildet, eine Periode von Druckspitzen im Fluid auf eine Periode der Drehmomentschwankung des Rotors abzustimmen.

Dadurch wird der technische Vorteil erreicht, dass eine Anpassung der Periode von abtriebsseitigen Druckspitzen im Fluid an die Periode der antriebsseitigen Drehmomentschwankung des Rotors erfolgt, so dass der Gesamtwirkungsgrad der Pumpe sich erhöhen lässt und es zu den bereits oben beschriebenen Vorteilen kommt.

In einer vorteilhaften Ausführungsform des Flüssigkeit führenden Haushaltsgeräts bzw. des Wäschepflegegeräts ist die Kopplung ausgebildet, eine Phase bzw. ein Phasenwinkel zwischen der Periode von abtriebsseitigen Druckspitzen im Fluid und der Periode der antriebsseitigen Drehmomentschwankung des Rotors zu kompensieren.

Dadurch wird der technische Vorteil erreicht, dass die Perioden sich gegenseitig kompensieren bzw. so im Gleichklang laufen und das Abtriebsdrehmoment an das Antriebsdrehmoment angepasst ist. Damit lässt sich der Gesamtwirkungsgrad der Pumpe erhöhen und es werden die bereits oben beschriebenen Vorteile realisiert.

In einer vorteilhaften Ausführungsform des Flüssigkeit führenden Haushaltsgeräts bzw. des Wäschepflegegeräts ist die Kopplung ausgebildet, ein betriebsbedingtes Abtriebsdrehmoment der radialen Kreiselpumpe gegen ein Antriebsdrehmoment des Rotors zumindest teilweise zeitlich zu kompensieren, in dem die entsprechenden antriebsseitigen und abtriebsseitigen Drehmomentenmaxima zeitlich übereinander gelegt werden.

Dadurch wird der technische Vorteil erreicht, dass es zu einem besonders vorteilhaften Rundlauf der Antriebs-Laugenpumpen-Einheit kommt, da der Abtrieb entsprechend an den Antrieb angepasst ist. Der zeitlich und örtlich eingebrachte, antriebsseitige Leistungsbedarf ist somit stets an den abtriebsseitigen Leistungsbedarf angepasst, dadurch kann der Antrieb mit weniger Leistungsreserven ausgestattet sein. Ferner muss ein Kompromiss zwischen rotatorisch angepasster Drehmomentwelligkeit und entsprechende Reduktion der Antriebsleistung bei der Pumpen- und Motorauslegung nur in abgeschwächter Weise eingehalten werden (Anpassung an die Last), so dass die Ausnutzung des Antriebs und besonders dessen Leistungsbedarf noch besser gestaltet werden kann.

In einer vorteilhaften Ausführungsform des Flüssigkeit führenden Haushaltsgeräts bzw. des Wäschepflegegeräts ist die Kopplung als eine Welle zwischen dem Pumpenlaufrad und dem Rotor ausgebildet, und ein Drehwinkel des Rotors bezüglich der Welle und ein Drehwinkel des Pumpenlaufrads bezüglich der Welle entsprechen einer vorgegebene Winkelbeziehung.

Dadurch wird der technische Vorteil erreicht, dass sich die Pumpe effizient betreiben lässt, denn die vorgegebene Winkelbeziehung kann aus Berechnungen, Messungen und Tests in der Pumpenauslegung analytisch oder experimentell bestimmt werden und dann einfach bei der Fertigung der Pumpen angewendet werden.

In einer vorteilhaften Ausführungsform des Flüssigkeit führenden Haushaltsgeräts bzw. des Wäschepflegegeräts ist eine Magnetisierung des elektrischen Pumpenantriebs, also des permanenterregten Rotors, auf eine Ausrichtung der Laufradschaufeln des Pumpenlaufrads und auf eine rotatorische Ausrichtung der Pumpendruckkammer mit angeformten tangentialen Druckstutzen als quasi geometrische Singularität, an der die Laufradschaufeln interferieren, abgestimmt.

Dadurch wird der technische Vorteil erreicht, dass durch die Magnetisierung des Antriebs sich das rotierende Magnetfeld in der rotatorischen Anordnung relativ zur Gehäusesingularität (Druckstutzen bzw. Gehäusezunge) verändern lässt. Ferner lassen sich durch die Anzahl und Ausrichtung der Laufradschaufeln die Druckspitzen im Fluid in ihrer Anzahl und Ausprägung verändern bzw. anpassen. Die relative Positionierung der Polpaare des Rotors zu den Pumpengehäuse interferierenden Pumpenlaufradschaufeln lässt sich nicht nur durch die Positionierung der Magnetisierung auf dem Rotor beeinflussen, sondern auch beim Pumpenfertigungsprozessschritt des Laufrad-Welle-Fügens. Denn ist bei der Welle-Nabe-Verbindung kein konstruktiver Formschluss in Form von Keilwellenprofil, Polygonprofil oder Zahnwellenprofil sowie Kerbverzahnung oder Mitnehmerelemente (Passfeder) vorgesehen, kann jede beliebige Positionierung zwischen der Welle und dem Pumpenlaufrad realisiert werden. Dafür muss die Welle-Nabe-Verbindung allerdings kraftschlüssig (Reibschluss: z.B. durch eine Rändelung) oder stoffschlüssig (Kleben, Löten, Schweißen) ausgeführt werden.

Es kann somit eine solche Konstruktion gewählt bzw. entworfen werden, welche die Drehmomentwelligkeit des Antriebs an die Druckspitzen der Pumpenhydraulik (fluidtechnische Interaktion zwischen der Pumpendruckkammer und dem Pumpenlaufrad) anpasst. Damit lässt sich der Wirkungsgrad der Pumpe steigern und es werden die bereits oben beschriebenen Vorteile realisiert.

In einer vorteilhaften Ausführungsform des Flüssigkeit führenden Haushaltsgeräts bzw. des Wäschepflegegeräts ist die Pumpendruckkammer als Ringoder Spiralgehäuse ausgebildet, an dem sich ein Druckstutzen anschließt, der Wirkungsgrad bedingt meist tangential angeformt ist, welcher an der Übergangsstelle eine Pumpengehäusezunge aufweist, welche bei der Förderung des Fluids als Unstetigkeitsstelle der Druckkammer wirkt und durch die Laufradrotation der Laufradschaufeln Druckspitzen an dieser Unstetigkeitsstelle generiert. So sollen Häufigkeit und Form von abtriebsseitigen Unstetigkeitsstellen wie z.B. bei Pumpen die Pumpengehäusezunge(n) auf den antriebsseitigen Drehmomentenverlauf abgestimmt sein, was sich durch die Positionierung von Magnet (Magnetisierung) bzw. Rotor zur Welle und zum Laufrad sowie zum Stator des elektrischen Antriebs abstimmt werden.

Dadurch wird der technische Vorteil erreicht, dass durch die bewusste örtliche Magnetisierung des Rotors und/oder Stators sich die Orientierung des rotierenden Magnetfelds in der Auslegungsphase quasi einmalig verändern lässt. Ferner lassen sich durch die Form der Pumpendruckkammer, der Pumpengehäusezunge und des angeformten Druckstutzen die Druckspitzen im Fluid anpassen bzw. rotatorisch verschieben. Es kann somit eine solche Konstruktion gewählt bzw. entworfen werden, welche die Drehmomentwelligkeit des Antriebs an die Druckspitzen des Abtriebs anpasst.

Damit lässt sich der Wirkungsgrad der Pumpe steigern und es werden die bereits oben beschriebenen Vorteile realisiert.

Gemäß einem zweiten Aspekt wird die erfindungsgemäße Aufgabe durch eine Pumpe für ein Wäschepflegegerät gelöst, wobei die Pumpe Folgendes umfasst:

Eine Pumpensaugkammer mit Fluideinlass (Saugstutzen) und Fluidauslass (Druckstutzen) an der Pumpendruckkammer; ein Pumpenlaufrad mit angeformten Laufradschaufeln, welches in der Pumpendruckkammer frei rotiert und welches ausgebildet ist, das Fluid von dem Fluideinlass (Saugstutzen) zu dem Fluidauslass (Druckstutzen) zu fördern, wobei die Pumpendruckkammer an dem Fluidauslass eine Singularitätsstelle aufweist, nämlich am Übergang zwischen dem Druckstutzen und einer Pumpengehäusezunge der Pumpendruckkammer, wobei bei einer Vorbeibewegung einer jeweiligen Laufradschaufel an der Singularitätsstelle eine Druckspitze im Fluid entsteht; einen elektrischen Pumpenantrieb mit einem mit elektrischen Wicklungen ausgestatteten Stator zum Aufbau eines rotierenden Magnetfeldes zum Antreiben eines innerhalb des Stators oder allgemein bezüglich des Stators frei rotierbaren magnetischen Rotors, der ausgebildet ist, das mit einer Welle verbundene Pumpenlaufrad anzutreiben, wobei ein Drehmoment auf den Rotor einwirkt, das abhängig von einem Drehwinkel des Rotors in Bezug auf die Wicklungen des Stators eine periodische Schwankung aufweist, wobei der Rotor mit dem Pumpenlaufrad konstruktiv durch eine Welle gekoppelt ist, wobei die Kopplung ausgebildet ist, bei einem Drehwinkel des Rotors, bei welchem eine Spitze - also ein Maximum - des Antriebs-Drehmoments auftritt, eine Stellung des Pumpenlaufrads zu bewirken, bei der eine Druckspitze abtriebsseitig im Fluid entsteht. Dadurch wird der technische Vorteil erreicht, dass die Pumpe bedingt durch die Anpassung der abtriebsseitigen, zeitlich bzw. örtlich unterschiedlichen Last an die Drehmomentenwelligkeit des Antriebs mit einem hohen Wirkungsgrad betrieben werden kann. Insbesondere ist die abtriebsseitige hydraulische Auslegung der Pumpe an die antriebsseitige elektrische Auslegung des Pumpenantriebs angepasst, insbesondere an den antriebsseitig eingebrachten drehwinkelabhängigen Drehmomentverlauf, wodurch der Wirkungsgrad der Pumpe sich erhöht.

Ferner wird der technische Vorteil erreicht, dass die Pumpe einen besonders vorteilhaften Rundlauf aufweist, da der Abtrieb entsprechend an den Antrieb angepasst ist. Der zeitlich und örtlich eingebrachte, antriebsseitige Leistungsbedarf ist stets an den abtriebsseitigen Leistungsbedarf angepasst, dadurch kann der Antrieb mit weniger Leistungsreserven ausgestattet sein. Ferner muss ein Kompromiss zwischen Drehmomentwelligkeit und Antriebsleistung bei der Pumpenauslegung nicht weiter eingehalten werden, so dass die Ausnutzung des Antriebs besser gestaltet werden kann. D.h. es kommt zu einer Kostensenkung oder zu einer Wirkungsgradoptimierung oder Leistungssteigerung bei gleichen Kosten. Die Antriebsregelung, insbesondere bei der permanenterregten Synchronarbeitsmaschine, kann einfacher ausfallen, da der Antrieb lastseitig auf den Abtrieb eingestellt ist. Ferner fallen durch die Drehmomentanpassung zwischen Antrieb und Abtrieb die lastwechselbedingten Geräusche geringer aus. Zusätzlich kann durch die hier beschriebene Anpassung zwischen Antrieb (Motor) und Abtrieb (Pumpe) der Geräuschpegel der gesamten Komponente deutlich gesenkt werden.

Gemäß einem dritten Aspekt wird die erfindungsgemäße Aufgabe durch ein Verfahren nach Anspruch 14 gelöst.

Durch ein solches Verfahren wird der technische Vorteil erreicht, dass die Pumpe mit einem hohen Wirkungsgrad betrieben werden kann. Insbesondere ist die abtriebsseitige, hydraulische Auslegung der Pumpe an die elektrische Auslegung des Pumpenantriebs angepasst, insbesondere an den antriebsseitig eingebrachten drehwinkelabhängigen Drehmomentverlauf, wodurch der Wirkungsgrad der Pumpe sich erhöht und das Verfahren besonders energieeffizient ausgeführt werden kann.

Ausführungsbeispiele der Erfindung sind in den Zeichnungen dargestellt und werden im Folgenden näher beschrieben.

Es zeigen:

Fig. 1 eine beispielhafte grafische Darstellung des eingebrachten Motordrehmoments 100 eines zwei poligen Innenläufer-Pumpenantriebs für eine vollständige Rotorumdrehung von $2\pi$ bzw. 360°;

Fig. 2a eine beispielhafte grafische Darstellung der Eingangsstromphase 200a bei dem Innenläufer-Pumpenantrieb der Figur 1;

Fig. 2b eine beispielhafte grafische Darstellung des Drehmoments 200b in Abhängigkeit von der Drehmomentwelligkeit bei dem Innenläufer-Pumpenantrieb der Figur 1;

Fig. 3 eine Stator-Rotor-Mittenschnitt Schnittdarstellung der Magnetflussdichte für einen Laugenpumpenantrieb 300 einer Wäschepflegemaschine bei einem zeitlichen Maximum des Drehmoments gemäß einer beispielhaften Ausführungsform;

Fig. 4 eine Stator Schnittdarstellung der Magnetflussdichte für den Laugenpumpenantrieb 300 aus Figur 3 bei einem zeitlichen Minimum des Drehmoments gemäß einer beispielhaften Ausführungsform;

Fig. 5 eine schematische, radiale Laufrad-Mittenschnitt-Darstellung mit Visualisierung der Strömungsvektoren mit Richtung und Betrag der Strömungsgeschwindigkeit 500 an einem Pumpenlaufrad 501 einer Pumpe mit vier geraden, radialen Schaufeln 502 in einer Pumpendruckkammer 503 gemäß einer beispielhaften Ausführungsform;

Fig. 6 eine Radialschnittdarstellung der Pumpendruckkammer 601 einer Entleerungspumpe 600 mit tangentialem Druckstutzen 603 gemäß einer beispielhaften Ausführungsform mit einer Laufradstellung in Relation zu einer Unstetigkeitsstelle bzw. Singularität am Pumpengehäuse, bei der sich kein Druckmaximum ergibt;

Fig. 7 eine Radialschnittdarstellung der Pumpendruckkammer einer Entleerungspumpe 700 mit tangentialem Druckstutzen 703 eines Umpumpsystems gemäß einer beispielhaften Ausführungsform mit einer Laufradstellung in Relation zu einer Unstetigkeitsstelle bzw. Singularität 710 am Pumpengehäuse 701, bei der sich ein Druckmaximum ergibt;

Fig. 8 eine schematische Darstellung einer Pumpe 800 für ein Wasser führendes Haushaltsgerät, insbesondere ein Wäschepflegegerät, mit Pumpendruckkammer 801, Pumpenlaufrad 804 und elektrischem Pumpenantrieb 805 gemäß einer beispielhaften Ausführungsform;

Fig. 9 eine Radialschnittdarstellung der Pumpendruckkammer 901 einer radialen Kreiselpumpe 900 mit einem Spiralgehäuse 901 für ein Wasser führendes Haushaltsgerät, insbesondere ein Wäschepflegegerät gemäß einer beispielhaften Ausführungsform;

Fig. 10 eine dreidimensionale schräg-parallel-projizierte Darstellung einer einphasigen Synchronmaschine 1000 mit Rotor 1002, Stator 1001 und Wicklung bzw. Spule 1003 zum Antrieb eines mit einer Welle verbundenen Pumpenlaufrads gemäß einer beispielhaften Ausführungsform des elektrischen Antriebs;

Fig. 11 eine schematische Darstellung eines Wäschepflegegeräts 1100 mit einer Pumpe 800 gemäß einer beispielhaften Ausführungsform; und

Fig. 12 eine schematische Darstellung eines Verfahrens 1200 zum Betreiben eines Wäschepflegegeräts 1100 mit einer Pumpe 800 gemäß einer beispielhaften Ausführungsform.

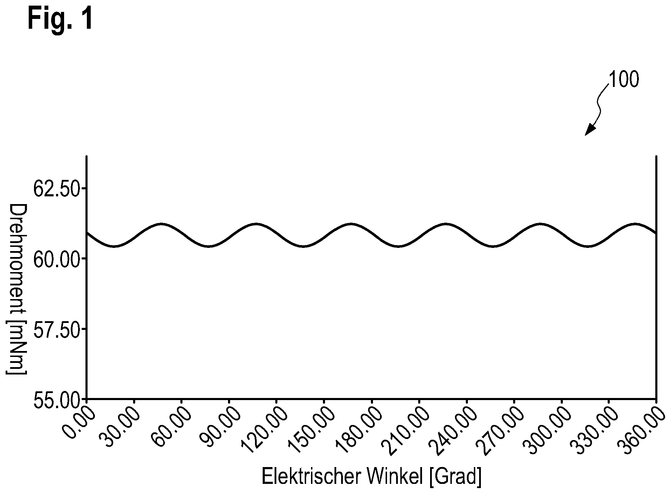

Fig. 1 zeigt eine beispielhafte grafische Darstellung des eingebrachten Motordrehmoments eines zweipoligen Innenläufer-Pumpenantriebs für eine vollständige Rotorumdrehung von $2\pi$ bzw. 360°.

Bei der Auslegung von Antrieben, bei denen zuvor der Verwendungszweck bekannt ist, wird versucht, das eingebrachte zeitlich bzw. örtliche Antriebsdrehmoment entsprechend dem Abtriebsdrehmoment zu gestalten. Dabei stellt sich der motorseitige eingebrachte Drehmomentenverlauf für permanenterregte Synchronantriebe zeitlich als nicht konstant dar. Dies ist begründet durch die entsprechende Topologie des Antriebs.

Hauptursache für die Drehmomentschwankung liegt in der Anziehungskraft zwischen ausgeprägten magnetischen Polen. Rotorseitig sind es die Magnete, wobei statorseitig die Zähne, welche die Wicklung tragen und den magnetischen Fluss zum Luftspalt führen. So ist die Anordnung und Anzahl der stationären Feldwicklungen und Zähne im Wechselspiel mit der entsprechenden Rotormagnetisierung (Polpaare) verantwortlich, wie sich das eingetragene Drehmoment über den Drehwinkel darstellt.

Es ergibt sich zeitlich bzw. auch örtlich über den Rotordrehwinkel eine periodische Schwankung des bereitgestellten Antriebsdrehmoments, die sich zum Beispiel als SinusFunktion oder als eine entsprechend der Flussverteilung im Luftspalt, der Magnet- und Zahnform angepassten Funktion darstellen lässt.

Figur 1 zeigt für einen Innenläufer-Pumpenantrieb mit drei Strangwicklungen im Stator und einem Polpaar für den Rotor den konstruktiv bedingten Drehmomentenverlauf für eine Rotorumdrehung von 360°. So lässt sich erkennen, dass sich bei einem Rotorumlauf, bedingt durch die entsprechende Motortopologie, genau sechs Drehmoment-Maxima und genau sechs Drehmoment-Minima einstellen, die sich in dem dargestellten Beispiel mit etwa 1% Schwankungsbreite vom Mittelwert abheben. Diese Drehmomentenmaxima werden oft auch als Antriebsrastmoment oder Polfühligkeit (englisch "cogging torque") bezeichnet und können z.B. mit Faktor zehn deutlich stärker ausfallen (prozentual um den Faktor 10: von 1% -> 10%), als hier in der Darstellung der Figur 1 gezeigt ist.

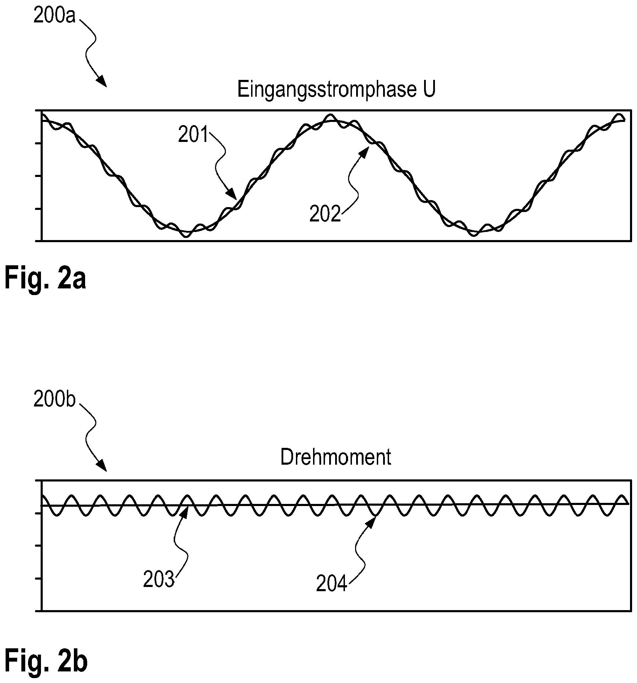

Diese Drehmomentenwelligkeit ergibt sich nicht nur bedingt durch die Topologie bzw. Zahn- und Rotorform des Motors, sondern stellt sich auch ein durch Oberschwingungen, welche die Grundwelle der Feld- und Durchflutungswellen überlagern, wie in den Figuren 2a und 2b gezeigt.

Die Drehmomentenwelligkeit stellt sich neben einer Topologie bzw. Zahn- und Rotorform des Motors auch durch Oberschwingungen ein, welche die Grundwelle der Feld- und Durchflutungswellen überlagern. Oberschwingungen können durch die pulsweitenmodulierte (PWM) Stromspeisung, die Stromform an sich und auch die Wicklungsanordnung bestimmt werden. Hochfrequente Anteile ergeben sich aus der PWM und sind direkt mit der Schaltfrequenz des Wechselrichters verknüpft. Die Stromform hingegen kann regelungstechnisch realisiert werden. Je nach Wicklungsanordnung kann die Flussführung im Luftspalt beeinflusst werden, so dass bei einer verteilten Wicklung geringere Kräfteschwankungen und bei einer konzentrierten Wicklung höhere Kräfteschwankungen entstehen.

Untergeordnet tragen sogar zeitlich nicht konstante mechanische Reibmomente zu einer zusätzlichen Welligkeit bei, z.B. Lagerreibung, Verschleiß an Dichtungen oder Unwucht durch exzentrische Massen, etc.

Fig. 2a zeigt eine beispielhafte grafische Darstellung der Eingangsstromphase bei dem Innenläufer-Pumpenantrieb der Figur 1. Der ideale Stromverlauf 201 ist in diesem Beispiel sinusförmig und wird durch die Stromwelligkeit überlagert, so dass sich ein mit der Welligkeit behafteter Strom 202 einstellt.

Fig. 2b zeigt eine beispielhafte grafische Darstellung des Antriebsdrehmoments in Abhängigkeit von der Drehmomentwelligkeit bei dem Innenläufer-Pumpenantrieb der Figur 1.

Das ideale Drehmoment 203 ist in diesem Beispiel konstant und wird durch die Drehmomentwelligkeit überlagert, so dass sich ein mit der Welligkeit behaftetes Antriebsdrehmoment 204 einstellt.

Die im Folgenden vorgestellten Ausführungsformen der Erfindung sind dafür ausgelegt, dieses eingebrachte zeitlich unterschiedliche Antriebsdrehmoment genau auf den entsprechenden Lastfall der Laugenpumpe abzustimmen. D.h. diese Ausführungsformen bewirken eine Synchronisation der Kopplung vom hydraulischen und elektrischen Lastfall hin zur konstruktiven Interferenz.

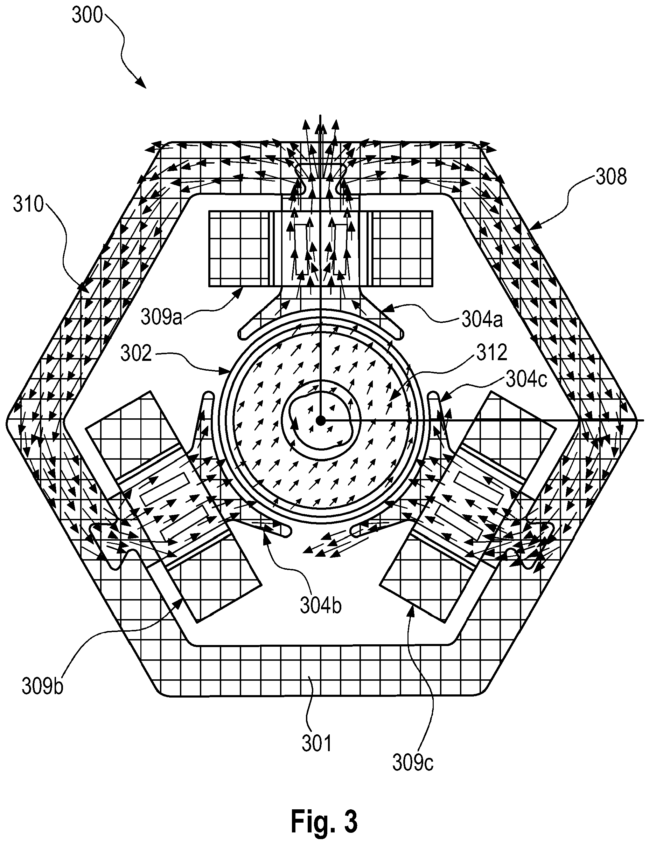

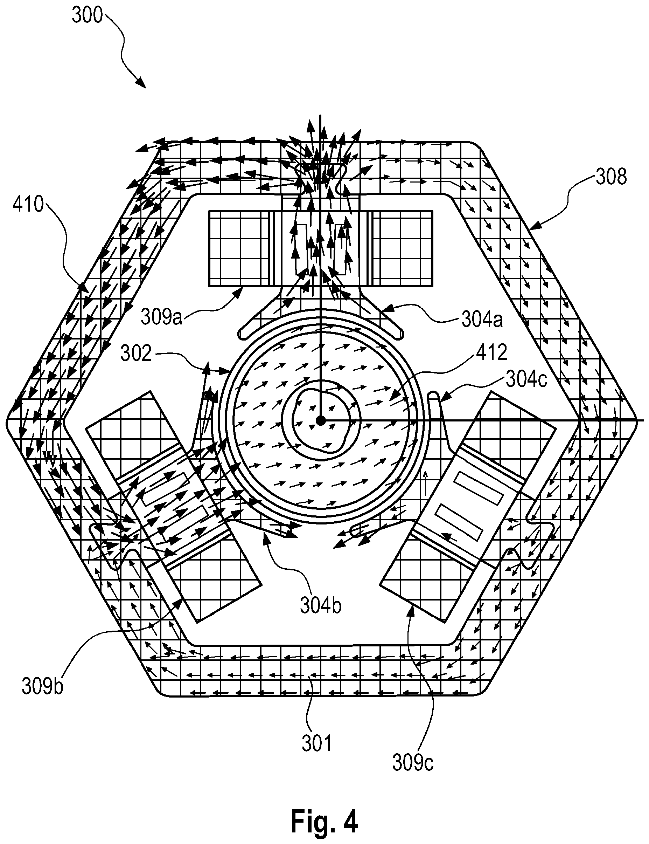

Die nachfolgenden Figuren 3 und 4 machen den Magnetfluss im ortsfesten Stator und im rotierenden Rotor für das maximale und minimale Motorantriebsdrehmoment deutlich.

Fig. 3 zeigt eine Stator-Rotor-Radialschnittdarstellung der Magnetflussdichte für einen Laugenpumpenantrieb 300 einer Wäschepflegemaschine bei einem zeitlichen bzw. örtlichen Maximum des Drehmoments gemäß einer beispielhaften Ausführungsform.

In den Figuren 1 und 2a, 2b wurden bereits die Drehmomentwelligkeits-Eigenschaften eines permanenterregte Synchronantriebes beschrieben, der hier im konkreten Beispiel der Figuren 3 und 4 als dreiphasiger Laugenpumpenantrieb dargestellt ist.

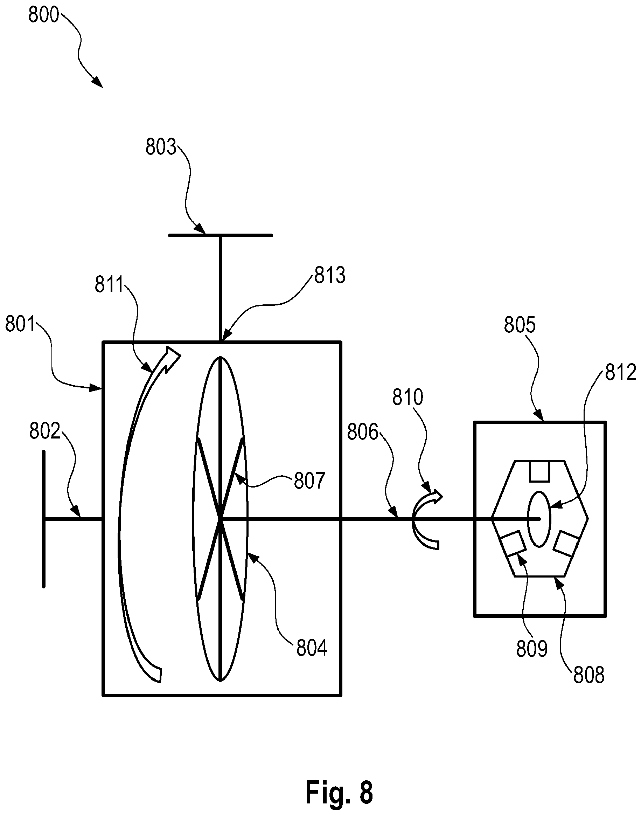

Der Laugenpumpenantrieb 300 umfasst einen mit elektrischen Wicklungen 309a, 309b, 309c ausgestatteten Stator 308 zum Aufbau eines rotierenden Magnetfeldes, das an den magnetischen Flusslinien 312 erkennbar ist. Das rotierende Magnetfeld 312 dient zum Antreiben eines innerhalb des Stators 308 frei rotierbaren permanent-magnetischen Rotors 302. Der Rotor 302 dient seinerseits dazu, ein Pumpenlaufrad einer Pumpe, z.B. einer Pumpe eines Wäschepflegegeräts wie in Figur 8 dargestellt, anzutreiben. Auf den Rotor 302 wirkt dabei ein Antriebsdrehmoment ein, das abhängig von einem Drehwinkel des Rotors 302 in Bezug auf die Wicklungen 309a, 309b, 309c des Stators 308 eine periodische Schwankung aufweist, wie beispielsweise in Figur 2b dargestellt.

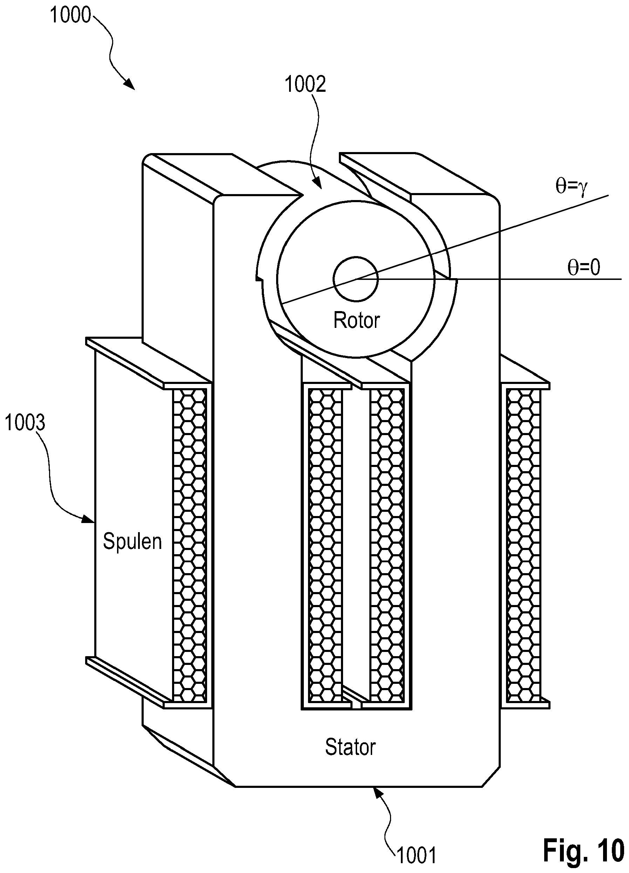

In dem Beispiel der Figur 3 weist der Stator 308 eine beispielhafte Konfiguration mit drei Zähnen 304a, 304b, 304c auf, auf welche jeweils die Wicklungen 309a, 309b, 309c gewickelt sind. Abhängig von dem Stromfluss durch die Wicklungen 309a, 309b, 309c lässt sich die Richtung des durch die Wicklungen 309a, 309b, 309c induzierten Magnetfeldes 312 ändern, so dass ein rotierendes Magnetfeld erzeugt werden kann. Zum Beispiel lässt sich die Antriebskonfiguration gemäß Figur 3 mit Drehstrom betreiben, so dass ein sich drehendes Magnetfeld 312 erzeugt wird. Natürlich sind jedoch auch andere Konfigurationen möglich, bei denen der Antrieb eine andere Anzahl an mit Wicklungen ausgestatteten Zähnen bzw. Spulen aufweist. Eine mögliche weitere Konfiguration (Minimalkonfiguration hinsichtlich der Polpaare) ist die einer einphasigen Synchronmaschine, wie beispielhaft in Figur 10 dargestellt.

In dem Beispiel der Figur 3 umfasst der Stator 308 einen sechseckigen Rahmen 301 (auch als Statorjoch bezeichnet) in dessen Innenseiten in symmetrischer Konfiguration die drei Zähne 304a, 304b, 304c mit den Wicklungen 309a, 309b, 309c eingebracht sind. Bei dem hier dargestellten zeitlichen bzw. örtlichen Maximum des Antriebsdrehmoments wird der Rahmen 301 nur zum Teil von Feldlinien 310 des rotierenden Magnetfelds 312 durchdrungen. Die Unterseite des Rahmens ist zu diesem Zeitpunkt frei von Feldlinien.

Fig. 4 zeigt eine Stator Radialschnittdarstellung der Magnetflussdichte für den Laugenpumpenantrieb 300 aus Figur 3 bei einem zeitlichen bzw. örtlichen Minimum des Antriebsdrehmoments gemäß einer beispielhaften Ausführungsform.

Das rotierende Magnetfeld 412 hat eine andere Richtung als das in Figur 3 dargestellte Magnetfeld 312.

Bei dem hier dargestellten Minimum des Antriebsdrehmoments wird der Rahmen 301 vollständig von Feldlinien 410 des rotierenden Magnetfelds 412 durchdrungen.

Beim Vergleich der Figuren 3 und 4 wird nicht nur die unterschiedliche Magnetflussdichte im Stator 308 deutlich, sondern auch die unterschiedliche Rotorstellung, die sich zwischen Minima und Maxima mit genau um 30° bzw. $\pi/6$ hinsichtlich des Rotor-Zentriwinkels unterscheidet.

Diese Nutrastmomente führen speziell bei niedrigen Drehzahlen zu einem unrunden Motorlauf, der i.d.R. für die meisten Anwendungen, so auch für den Antrieb einer Laugenpumpe, nicht erwünscht ist.

Die Figuren 3 und 4 zeigen nur Beispiele eines elektrischen Antriebs für eine Pumpe auf. Es sind diverse andere Konfigurationen möglich, wie im Folgenden angeführt. Der elektrische Antrieb kann beispielsweise eine rotierende elektrische Maschine mit permanenterregtem Feld im Läufer und feststehenden Ankerwicklungen im Stator umfassen, z.B. entsprechend dem Aufbau der bürstenlosen Gleichstrommaschinen oder der permanenterregten Synchronmaschine. Ferner kann der Antrieb eine Kommutatormaschine oder eine elektrisch erregte Synchronmaschine oder auch eine Asynchronmaschine umfassen. Angelehnt an die Asynchronmaschine (ohne Magneten im Rotor) kann der Antrieb eine Reluktanzmaschine umfassen. Diese wird ohne Magnete ausgeführt und arbeitet mit der Anziehungskraft zwischen magnetischem Drehfeld, erzeugt durch den Stator, und dem eisenhaltigen Rotor, welcher so ausgeführt wird, dass er ausgeprägte bessere magnetische Eigenschaften entlang des Umfangs aufweist und dadurch dieser dem Drehfeld des Stators folgt.

Bei elektronisch kommutierten oder aus einem m-phasigen Netz gespeisten Ankerwicklungen sind diese Strangwicklungen entweder ineinander verschachtelt (verteilte Wicklung) oder nacheinander angeordnet. Letztere werden als Einzelzahnwicklung oder auch konzentrierte Wicklung mit kreuzungsfreien Wickelköpfen bezeichnet. Ein charakteristisches Maß für den Wicklungsaufbau ist die Lochzahl q, welche angibt wie viele Nuten q pro Strang m und Pol (durch Polzahl 2p gegeben) zur Verfügung stehen: q=N/(2p*m).

Bei verteilten Wicklungen ist q $\geq$ 1 und wenn q ganzzahlig ist, handelt es sich um eine Ganzlochwicklung. Von Bruchlochwicklung spricht man, wenn q = $z_q/n_q$ eine gebrochen rationale Zahl ist. Bei Einzelzahnwicklungen ist q < 1 und somit stets gebrochen.

Der Verlauf des Nutrastmoments kann aus dem Zusammenwirken der Polkante mit dem Nutschlitz und der örtlichen Überlagerung aller Polkanten abgeleitet werden. Dadurch ist es möglich, den Einfluss sowohl der Magnetbreite und der Geometrie von Luftspalt und Nutschlitz als auch von gezielt eingebrachten Asymmetrien (z.B. Pol- oder Nutversatz) und der geometrischen Toleranzen abzuschätzen.

Die Beziehung $v_c$ = 2p*m*q*$n_q$ gibt den Zusammenhang bei Synchronmotoren zwischen der Drehmomentwelligkeit und der Motorkonfiguration an.

Dabei können die Parameter auch wie folgt bezeichnet werden:

- v_c : Anzahl der Wellen pro elektrischer Periode
- p: Polpaarzahl des Motors (BLDC Pumpe hat z.B. p = 1 à 2 Pole im Rotor)
- m: Strangzahl des Motors (bei 3 Phasen à 3 Stränge)
- q: Lochzahl und gibt an wie viele Nuten pro Pol und Strang für die Wicklung gebraucht werden: q = N/(2*p*m)

   o N: Anzahl der Nuten à Anzahl der Zähne im Stator

- n_q: Nenner der Lochzahl.

o

$$q = z\_q/n\_q$$

▪ z_q: Zähler der Lochzahl

In dem Beispiel der Figuren 3 und 4 bezüglich einer BLDC Pumpe sind folgende Werte gegeben:

-
$$p = 1$$

-
$$m = 3$$

-
$$N = 3$$

-
$$q = 3/(2*1*3) = 1/2 \text{ à } n\_q = 2$$

-
$$v\_c = 2*1*3*1/2*2 = 6$$

Weiterhin lässt sich bei Synchronmotoren die elektrische Periode f_el mittels der Polpaarzahl p aus der mechanischen Periode f_mech herausrechnen.

Die folgende Frequenzbedingung gilt hier:

-
$$f\_el = p *f\_mech$$

-
$$f\_x = 2*pi/T\_x$$

o f_x: eine Frequenz in Hz
o T_x: eine Periode in Hz

Für die Konfiguration der Figuren 3 und 4 ist somit die elektrische als auch die mechanische Periode gleich lang, da p=1. Somit stellen sich 6 Antriebsdrehmomentmaxima und Minima pro Umdrehung ein.

In Pumpen gemäß Ausführungsbeispielen der Erfindung wird der Abtrieb auf genau diese Anzahl an Drehmoment-Rippeln (d.h. Schwankungen) angepasst oder entsprechend des Antriebs gewählt und ausgelegt.

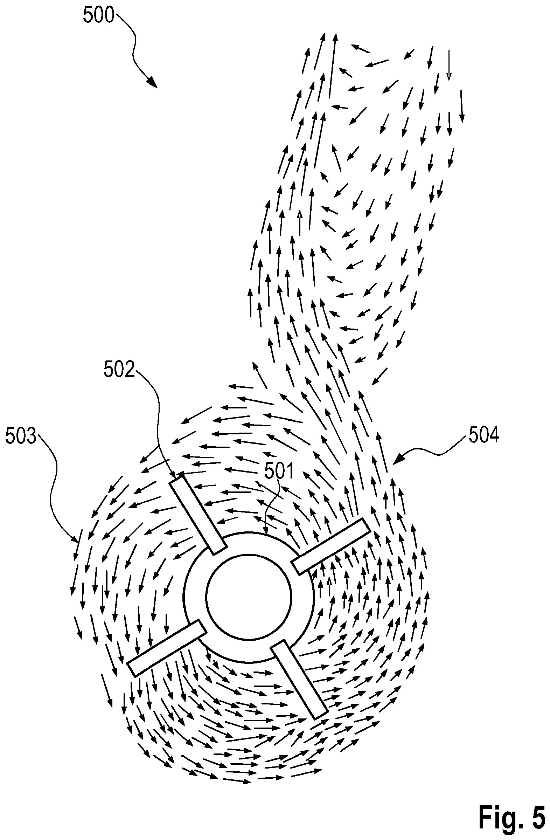

Fig. 5 zeigt eine schematische Darstellung der Strömungsgeschwindigkeit an einem Pumpenlaufrad 501 einer Pumpe mit vier geraden, radialen Schaufeln 502 gemäß einer beispielhaften Ausführungsform.

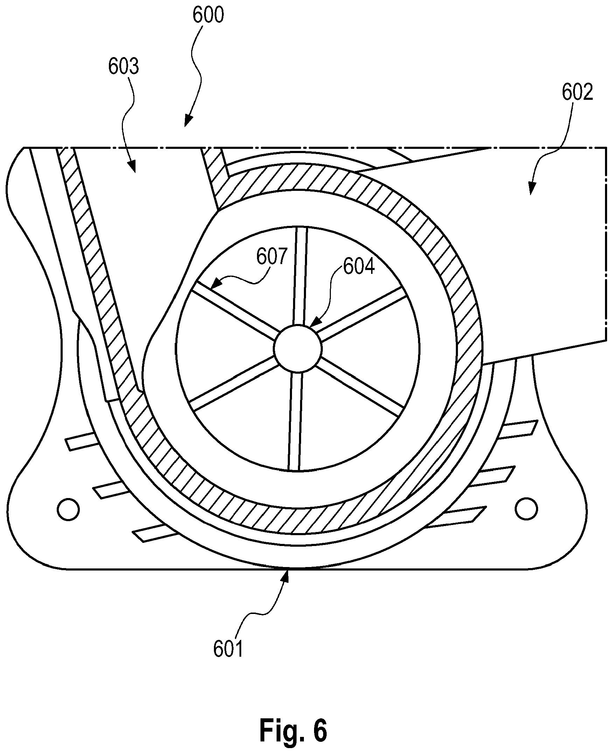

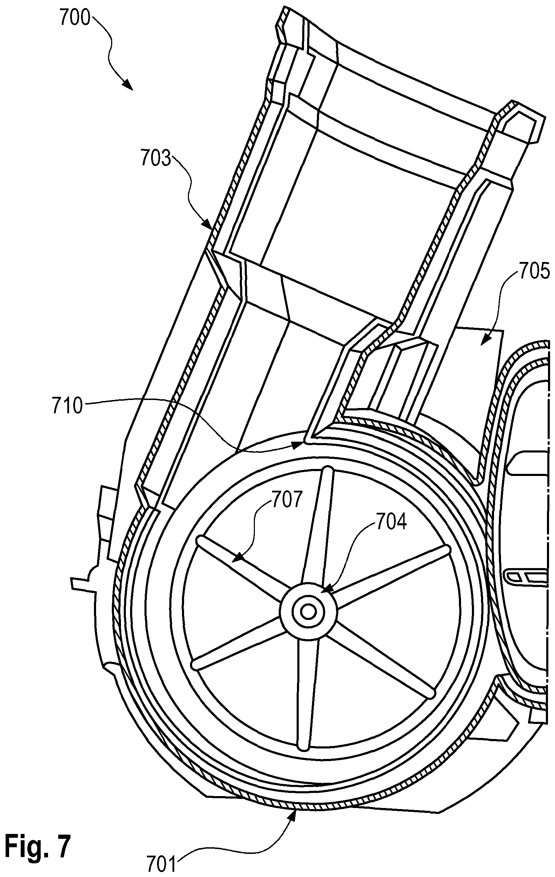

In flüssigkeitsführenden Haushaltsgeräten wie Waschmaschinen, Wäschetrockner oder Geschirrspüler oder andere werden aufgrund des Förderhöhen-Förderstrom-Verhältnisse $n_q$ in der Regel radiale Kreiselpumpen zur Medienförderung eingesetzt. Dabei wird über einen Antrieb ein schaufelbestücktes Laufrad 501 wie in Fig. 5 dargestellt in einem hydraulischen Gehäuse 503 in Rotation versetzt. Nach einer axialen Zuströmung wird das zu fördernde Fluid durch das schaufelbestückte Laufrad 501 radial beschleunigt und in einer sich anschließenden Druckkammer (wie auch in den Figuren 6 und 7 dargestellt), die als Ring- (503, 601, 701) oder Spiralgehäuse (901), bei dem sich der Strömungsquerschnitt mit dem Zentriwinkel stetig vergrößert, ausfallen kann, gesammelt und über einen Druckstutzen 603, 703, 903 abgeleitet.

Ein Druckstutzen bzw. Pumpendruckstutzen 603, 703, 903 ist der austrittsseitig am Pumpengehäuse zu definierende Querschnitt (meist Kreisquerschnitt) als Grenze zwischen druckseitiger Pumpenanlage und Pumpe.

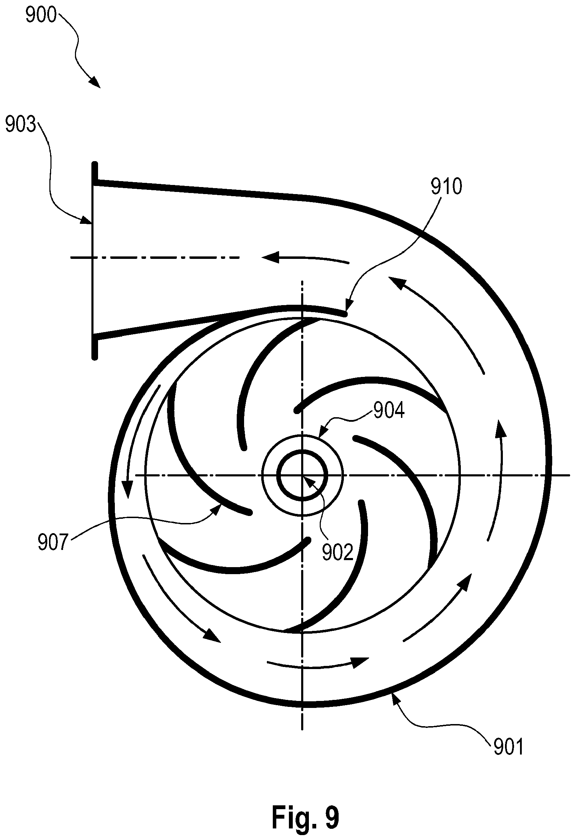

Die Pumpendruckkammer wird meist Wirkungsgrad bedingt als Spiralgehäuse 901 (wie z.B. in Figur 9 dargestellt), bei dem der tangentiale Strömungsquerschnitt mit steigendem Zentriwinkel auch stetig zunimmt, ausgeführt, kann aber auch als ein Ringgehäuse mit einem konstanten Strömungsquerschnittsverlauf über den Zentriwinkel dargestellt werden. Prinzip bedingt liefert daher eine Kreiselpumpe bei Rotation des Laufrades einen quasi zeitlich konstanten Förderstrom, anders als (Rotations-)Kolbenarbeitsmaschinen, die den Förderstrom zeitlich pulsierend realisieren.

Bei der Laufradauslegung für radiale Kreiselpumpen, insbesondere für Flüssigkeits führende Haushaltsgeräte, müssen sehr viele Vorgaben berücksichtigt werden. Dazu gehört z.B. die folgende Auswahl: Förderdruck bzw. Förderhöhe, Förderstrom, Kavitationssicherheit, Fremdkörper-Fördervermögen, Lebensdaueranforderungen hinsichtlich Verschleiß und vieles mehr. Um für flüssigkeitsführende Haushaltsgeräte aus diesen Auslegungsanforderung einen sinnvollen Kompromiss für die Laufradauslegung zu finden, kommen meist Laufräder mit vier, fünf, ... bis zu neun Schaufeln zum Einsatz. Wenn nun diese rotierenden Laufradschaufeln 502 Prinzip bedingt an der Unstetigkeitsstelle bzw. Singularität 710 der Druckkammer, also dem Druckstutzen bzw. der sogenannten Pumpengehäusezunge 710, sich vorbei bewegen, entsteht eine kurzzeitige Interferenz zwischen dem Laufrad 501 und dem Pumpengehäuse, die sich in Form einer Druckspitze 504 ausbildet wie anhand der Strömungslinien 504 in Figur 5 dargestellt. So entstehen bei einer vollständigen Laufrad- 501 oder Rotordrehung des Antriebs genauso viele Druckspitzen 504, wie das Laufrad 501 über Schaufeln 502 verfügt. Diese Druckspitzen 504 äußern sich im Abtriebsstrang als zeitliche bzw. örtliche Abtriebsdrehmomentspitzen bzw. -maxima.

Figur 5 macht in einer Radialschnittdarstellung der Pumpendruckkammer einer Waschmaschinen-Entleerungspumpe die Geschwindigkeitsverteilung am Pumpenlaufrad 501 bzw. in der Pumpendruckkammer deutlich. Die Strömungsvektoren 503 in der Druckkammer sind annähernd gleichmäßig, während sich besonders an Laufrad-Schaufelspitze und der Unstetigkeitsstelle des Druckstutzens Druckspitzen einstellen, was sich teilweise in erhöhter Strömungsgeschwindigkeit äußert (die Strömungslinien 504 sind länger).

In der Strömungsgeschwindigkeitsdarstellung der Figur 5 am Pumpenlaufrad 501 lässt sich gut erkennen, wie sich die höchsten Geschwindigkeiten 504 an den Schaufelenden einstellen. Diese ausgeprägten Geschwindigkeitsüberhöhungen 504 liefern beim Interferieren mit der Gehäusezunge die zuvor beschriebenen Druckspitzen, die besonders bei Druckkammern mit tangentialem Druckstutzen (wie in Figur 6 und 7 dargestellt) und zusätzlichem Spiralgehäuse als Pumpendruckkammer 901 ausgeprägt sind. Die Figuren 6 und 7 machen diese Interferenzen zwischen Gehäuse und Laufrad noch einmal deutlich.

Fig. 6 zeigt eine Radialschnittdarstellung der Pumpendruckkammer einer Entleerungspumpe 600 mit tangentialem Druckstutzen 603 gemäß einer beispielhaften Ausführungsform mit einer Laufradstellung, bei der sich kein Druckmaximum ergibt.

Die Entleerungspumpe 600 umfasst eine Pumpenkammer bzw. Pumpendruckkammer 601 (im radialen Schnitt dargestellt) mit Fluideinlass, durch den Saugstutzen 602 und Fluidauslass aus dem tangentialen Druckstutzen 603. Die Entleerungspumpe 600 umfasst ein Pumpenlaufrad 604 mit in der Pumpenkammer bzw. Druckkammer 601 frei rotierbaren Laufradschaufeln 607. Das Pumpenlaufrad ist dafür ausgelegt, das Fluid bzw. Medium von dem Fluideinlass 602 zu dem Fluidauslass 603 zu fördern. Die Pumpenkammer 601 weist an dem Fluidauslass eine Übergangsstelle (Singularität oder auch Unstetigkeit) auf, gebildet durch den Druckstutzen 603. Bei einer Vorbeibewegung einer jeweiligen Laufradschaufel 607 an der Übergangsstelle, d.h. bei einem Passieren des Druckstutzens 603 entsteht eine Druckspitze 504 im Fluid, wie schematisch in Figur 5 dargestellt.

D.h., wenn die rotierenden Laufradschaufeln 607 an der Unstetigkeitsstelle der Druckkammer, also dem Druckstutzen 603 bzw. der sogenannten Pumpengehäusezunge (Singularität oder auch Unstetigkeit), sich vorbei bewegen, entsteht eine kurzzeitige Interferenz zwischen dem Laufrad 607 und dem Pumpengehäuse, die sich in Form einer Druckspitze 504 ausbildet. So entstehen bei einer vollständigen Laufrad- oder Rotordrehung des Antriebs genauso viele Druckspitzen, wie das Laufrad 604 über Schaufeln 607 verfügt, sofern das interferierende Gehäuse nur eine Unstetigkeitsstelle aufweist, d.h. in dem Beispiel der Figur 6 entstehen sechs Druckspitzen. Diese Druckspitzen äußern sich im Abtriebsstrang als zeitliche bzw. örtliche Drehmomentspitzen bzw. -maxima. In der Darstellung der Figur 6 bewegt sich eine Schaufel 607 gerade entlang des Druckstutzens 603 ohne jedoch die Verengungsstelle der Gehäusezunge zu passieren, d.h. in Figur 6 ist die Situation dargestellt, in der sich kein Druckmaximum einstellt, es handelt sich vielmehr um ein Druckminimum.

Fig. 7 zeigt eine radiale Schnittdarstellung der Pumpendruckkammer einer Entleerungspumpe 700 mit tangentialem Druckstutzen eines Umpumpsystems gemäß einer beispielhaften Ausführungsform mit einer Laufradstellung, bei der sich ein Druckmaximum durch Interferenz mit der Gehäusezunge (Singularität oder auch Unstetigkeit) ergibt.

Die Entleerungspumpe 700 umfasst eine Pumpenkammer bzw. Druckkammer 701 (im radialen Schnitt dargestellt) mit Fluideinlass, senkrecht-also axial - zum Pumpenlaufrad 704 dargestellt, d.h. aus der Zeichnungsebene herauskommend, und Fluidauslass aus dem tangentialen Druckstutzen 703. Die Entleerungspumpe 700 umfasst ein Pumpenlaufrad 704 mit in der Pumpenkammer bzw. Druckkammer frei rotierbaren Laufradschaufeln 707. Das Pumpenlaufrad 704 ist dafür ausgelegt, das Fluid bzw. Medium von dem Fluideinlass (Saugstutzen) zu dem Fluidauslass (Druckstutzen) 703 zu fördern. Die Pumpenkammer 701 weist an dem Fluidauslass eine Verengungsstelle 710 auf, gebildet durch die Gehäusezunge 710 mit dem Druckstutzen 703. Bei einer Vorbeibewegung einer jeweiligen Laufradschaufel 707 an der Verengungsstelle 710, d.h. nach einem Passieren des Druckstutzens 703 an der Gehäusezunge 710 entsteht eine Druckspitze 504 im Fluid, wie schematisch in Figur 5 dargestellt.

In der radialen Schnittdarstellung der Fig. 7 ist die Entleerungs-Druckkammer 701 mit tangentialem Druckstutzen 703 eines Umpumpsystems zu erkennen, und zwar bei einer Laufradstellung, bei der sich ein Druckmaximum ergibt. Bei einem Druckmaximum stellt sich zwischen Laufradschaufel 707 und Gehäusezunge 710 der kürzeste Abstand ein.

Die Entleerungspumpe 700 umfasst ferner einen elektrischen Pumpenantrieb 705, z.B. gemäß der Darstellung der Figuren 3 und 4, mit einem mit elektrischen Wicklungen ausgestatteten Stator zum Aufbau eines rotierenden Magnetfeldes zum Antreiben eines innerhalb des Stators frei rotierbaren permanent magnetischen Rotors, der mit einer Welle ausgebildet ist, das Pumpenlaufrad 704 anzutreiben, wobei ein Antriebsdrehmoment auf den Rotor einwirkt, das abhängig von einem Drehwinkel des Rotors in Bezug auf die Wicklungen des Stators eine periodische Schwankung aufweist, wie in Figur 2b dargestellt. Der Rotor ist mit dem Pumpenlaufrad 704 konstruktiv gekoppelt. In Figur 7 ist als Kopplung eine Welle vorgesehen, an der Antrieb 705 und Laufrad 704 montiert sind. Diese Welle kommt gemäß der Darstellung in Fig. 7 aus der Zeichenebene heraus. Die Kopplung ist ausgebildet, bei einem Drehwinkel des Rotors, bei welchem eine Spitze des Drehmoments auftritt, wie in Figuren 1 bis 2b dargestellt, eine Stellung des Pumpenlaufrads 704 zu bewirken, bei der die Druckspitze 504 im Fluid entsteht, wie in Fig. 5 dargestellt. Diese Stellung entspricht gerade der in Figur 7 dargestellten Stellung des Laufrads 704, d.h. zwischen Laufradschaufel 707 und Gehäusezunge 710 stellt sich der kürzeste Abstand ein bzw. bei einem Ringgehäuse stellt sich wieder der kürzeste gleichbleibende Abstand ein.

Die hier vorliegende Erfindung beschreibt eine Abstimmung zwischen der hydraulischen Auslegung des Pumpenlaufrades und der elektrischen Auslegung des Pumpenantriebs. So sollte die Auswahl der Polpaare des Antriebs in einem Ausführungsbeispiel der Pumpe mit genau der Anzahl oder zumindest mit dem ganzen Vielfachen der Pumpenlaufrad-Schaufelanzahl übereinstimmen, damit sich eingebrachtes Drehmoment vom Antrieb mit dem periodischen Verhalten des Abtriebsdrehmoments decken bzw. zumindest zeitweise kompensieren. Das bedeutet, immer wenn der Antrieb konstruktiv bedingt eine Drehmomentenspitze ausbildet, ist auch lastseitig eine hydraulische Erhöhung des Abtriebsdrehmoments vorhanden.

In den Figuren 6 und 7 sind Laufräder 604, 704 mit genau sechs Laufradschaufeln 607, 707 dargestellt. Laufräder mit genau sechs Schaufeln passen bezüglich der Drehmomentausprägung also am geeignetsten zu der oben beschriebenen Motortopologie (siehe Figuren 3 und 4), da sich bei einer Laufradumdrehung je sechs Drehmomentmaxima antriebs- und abtriebsseitig ausbilden.

Um diese Drehmomentenmaxima konstruktiv aufeinander abzustimmen, sollte in einer Ausführungsform der Pumpe beim Fügen zwischen den Wellen des vorkonfigurierten, bereits magnetisierten Rotors mit dem Pumpenlaufrad eine genaue und gleichbleibende Lagepositionierung eingehalten werden. Oder bei anderer Fertigungsreihfolge sollte bei der Magnetisierung der Rotor-Wellen-Laufrad-Einheit die Ausrichtung der Laufradschaufeln beachtet werden.

Desweitern sollte auch bei der Komplettierung des Pumpenantriebs mit dem Pumpengehäuse die Ausrichtung zwischen Pumpengehäusezunge und Laufradschaufeln gleichbleibend beachtet werden, damit die Lagebeziehung zwischen den Statorzähnen und dem Druckspitzen verursachenden Pumpenlaufrad berücksichtigt werden kann. Nur mit diesen hier beschriebenen Maßnahmen beim Fügen der hydraulischen Komponenten mit dem Antrieb, d.h. 1. Laufrad-Welle lagegenau fügen; 2. Magnetisierung lagegenau einbringen; und 3. Antrieb-Pumpengehäuse lagegenau fügen, kann sichergestellt werden, dass sich stets ein antriebsseitiges Drehmomentmaximum beim Passieren einer Laufradschaufel an der Gehäusezunge des Pumpengehäuses und somit ein abtriebsseitiges Drehmomentmaximum einstellt.

Mit den hier beschriebenen auslegungsbedingten und fertigungstechnischen Anforderungen an die Auslegung des Pumpenantriebes und die hydraulische Auslegung der radialen Kreiselpumpe werden folgende Vorteile für die Pumpen (Entleerungspumpen, Zirkulationspumpen, Kondensatpumpen, u.a.) in Haushaltsgeräten generiert (Selbst Dosierpumpen, die nach dem vulometrischen Verdrängungsprinzip arbeiten bzw. fördern und somit nicht zu den Strömungsmaschinen (Kreiselpumpen) zählen, erzeugen Prinzip- und Konstruktionsbedingt auch Druckspitzen die es gilt antriebsseitig zu synchronisieren):

    1. Ein besonders vorteilhafter Rundlauf der Antriebs-Abtriebs-Laugenpumpen-Einheit.
    2. Der zeitlich und örtlich eingebrachte, antriebsseitige Leistungsbedarf ist stets an den abtriebsseitigen Leistungsbedarf angepasst, dadurch kann der Antrieb mit weniger Leistungsreserven ausgestattet sein.
    3. Ein Kompromiss zwischen Drehmomentwelligkeit und Antriebsleistung muss bei der Pumpenauslegung nicht weiter eingehalten werden, sodass die Ausnutzung des Antriebs besser gestaltet werden kann. D.h. es kommt zu einer Kostensenkung oder zu einer Wirkungsgradoptimierung oder Leistungssteigerung bei gleichen Kosten.
    4. Die Antriebsregelung der permanenterregten Synchronarbeitsmaschine kann einfacher ausfallen, da der Antrieb lastseitig auf den Abtrieb eingestellt ist.
    5. Durch die Drehmomentanpassung zwischen Antrieb und Abtrieb fallen die lastwechselbedingten Geräusche geringer aus. Subjektive Geräusche können teilweise ganz vermieden werden.

Fig. 8 zeigt eine schematische Darstellung einer Pumpe 800 für ein Wäschepflegegerät, mit Pumpenkammer 801, Pumpenlaufrad 804 und elektrischem Pumpenantrieb gemäß einer beispielhaften Ausführungsform.

Die Pumpe 800 umfasst eine Pumpenkammer 801 mit Fluideinlass 802 und Fluidauslass 803, z.B. wie oben zu den Figuren 6 und 7 beschrieben. Die Pumpe 800 umfasst ferner ein Pumpenlaufrad 804 mit in der Pumpendruckkammer 801 frei rotierbaren Laufradschaufeln 807. Das Pumpenlaufrad 804 ist ausgebildet, das Fluid von dem Fluideinlass (Pumpensaugstutzen) 802 zu dem Fluidauslass (Pumpendruckstutzen) 803 zu fördern. Die Pumpendruckkammer 801 weist an bzw. hinter dem Fluidauslass 803 eine Verengungsstelle (Singularität oder auch Unstetigkeit) 813 auf. Bei einer Vorbeibewegung einer jeweiligen Laufradschaufel 807 an der Verengungsstelle (Singularität oder auch Unstetigkeit) 813 entsteht eine Druckspitze 504 im Fluid, wie oben zu Figur 5 beschrieben.

Die Pumpe 800 umfasst einen elektrischen Pumpenantrieb 805, wie z.B. zu den Figuren 3 und 4 beschrieben, mit einem mit elektrischen Wicklungen 809 ausgestatteten Stator 808 zum Aufbau eines rotierenden Magnetfeldes 312, 412 zum Antreiben eines innerhalb des Stators 808 frei rotierbaren dauer-magnetischen Rotors 812, der ausgebildet ist, das Pumpenlaufrad 804 anzutreiben. Dabei wirkt ein Drehmoment 100 (siehe Figur 1) auf den Rotor 812 ein, das abhängig von einem Drehwinkel des Rotors 812 in Bezug auf die Wicklungen 809 des Stators 808 eine periodische Schwankung aufweist. Der Rotor 812 ist mit dem Pumpenlaufrad 804 konstruktiv gekoppelt 806, z.B. wie in Figur 7 beschrieben. Die Kopplung 806 ist ausgebildet, bei einem Drehwinkel des Rotors 812, bei welchem eine Spitze des Antriebs-Drehmoments 100 (siehe Figur 1) auftritt, eine Stellung des Pumpenlaufrads 804 zu bewirken, bei der die Druckspitze 504 im Fluid entsteht. Die Kopplung kann beispielsweise durch Welle realisiert sein.

Die Kopplung 806 kann ausgebildet sein, die Stellung des Pumpenlaufrads 804 basierend auf einer Wicklungsanordnung der Wicklungen 809 des Stators 808 zu bewirken, wie beispielsweise oben zu Figur 4 beschrieben. Die Kopplung 806 kann ausgebildet sein, die Stellung des Pumpenlaufrads 804 basierend auf einer Anzahl von Magneten, mit denen der Rotor 812 ausgestattet ist und/oder einer Anzahl der Wicklungen 809 des Stators 808 zu bewirken, wie beispielsweise oben zu Figur 4 beschrieben.

Der Stator 808, 308 kann eine Mehrzahl von Zähnen 304a, 304b, 304c aufweisen, wie beispielsweise oben zu Figuren 3 und 4 beschrieben, auf welche die Wicklungen 309a, 309b, 309c aufgebracht sind. Die Kopplung 806 kann ausgebildet sein, die Stellung des Pumpenlaufrads 804 basierend auf einer Form der Zähne 304a, 304b, 304c des Stators 308, 808 und/oder einer Form der Laufradschaufeln 807 des Pumpenlaufrads 804 zu bewirken.

Die Kopplung 806 kann ferner eine Fügestelle zwischen dem Rotor 812 und dem Pumpenlaufrad 804 aufweisen, welche entsprechend einer vorkonfigurierten Lagepositionierung ausgebildet ist.

Die Kopplung 806 kann beispielsweise auf einer Anzahl an Polpaaren des elektrischen Pumpenantriebs 805 und einer Anzahl von Laufradschaufeln 807 des Pumpenlaufrads 804 basieren. Z.B. kann die Anzahl an Polpaaren mit der Anzahl von Laufradschaufeln 807 oder einem ganzzahligen Vielfachen der Anzahl der Laufradschaufeln 807 übereinstimmen.

Die Kopplung 806 kann ausgebildet sein, eine Periode von Druckspitzen 504 im Fluid, wie z.B. in Fig. 5 dargestellt, auf eine Periode der Drehmomentschwankung des Rotors 812 abzustimmen. Die Kopplung 806 kann z.B. eine Phase zwischen der Periode von Druckspitzen 504 im Fluid und der Periode der Drehmomentschwankung des Rotors 812 kompensieren, d.h. beide Perioden laufen synchron und phasengleich zueinander.

Die Kopplung 806 kann insbesondere ausgebildet sein, ein Abtriebsdrehmoment 811 des Fluids gegen ein Antriebsdrehmoment 810 des Rotors 812 zumindest teilweise zu kompensieren. Damit kann sie einen Gleichlauf zwischen Antrieb 805 und Pumpenlaufrad 804 bewirken.

Die Kopplung 806 kann beispielsweise als eine Welle zwischen dem Pumpenlaufrad 804 und dem Rotor 812 ausgebildet sein, wobei ein Drehwinkel des Rotors 812 bezüglich der Welle 806 und ein Drehwinkel des Pumpenlaufrads 804 bezüglich der Welle 806 einer vorgegebenen Winkelbeziehung entsprechen, z.B. wie oben beschrieben, derart, dass beide Perioden synchron und phasengleich zueinander verlaufen.

Eine Magnetisierung des elektrischen Pumpenantriebs 805 kann auf eine Ausrichtung der Laufradschaufeln 807 des Pumpenlaufrads 804 abgestimmt sein.

Wie in den Figuren 6, 7 und 9 näher dargestellt, kann die Pumpenkammer 801 als Druckkammer 701, 901 ausgebildet sein, welche an der Verengungsstelle (Singularität oder auch Unstetigkeit) eine Pumpengehäusezunge 710, 910 aufweist, welche bei der Förderung des Fluids als Unstetigkeitsstelle 710, 910 der Druckkammer 701, 901 wirkt. Dabei kann eine Form und Lage der Pumpengehäusezunge 710, 910 auf die Magnetisierung des Rotors 812 und/oder des Stators 808 des elektrischen Antriebs 805 abgestimmt sein.

Die in Figur 8 beschriebene Pumpe 800 kann für verschiedenste Zwecke eingesetzt werden. Neben dem hier schwerpunktmäßig beschriebenen Einsatz als Laugenpumpe eines Wäschepflegegeräts bzw. als Entleerungspumpe, Zirkulationspumpe, Kondensatpumpe ist auch der Einsatz als Dosierpumpe für ein Wäschepflegegerät möglich.

Das in dieser Anmeldung beschriebene Grundprinzip kann bei einer Vielzahl von Pumpen eingesetzt werden, z.B. Kältepumpen in Klimaanlagen, Pumpen in Kühlschränken, Wasserpumpen oder Ölpumpen im KFZ-Bereich. Das Prinzip ist neben Pumpen auch auf Lüfter anwendbar, z.B. Lüfter zum Kühlen von elektronischen Geräten oder maschinellen Anlagen, Lüfter in Klimaanlagen, Lüfter in Haartrocknern, etc. Das Grundprinzip ist auf alle Geräte anwendbar, wo ein periodisch schwankendes Antriebsdrehmoment erzeugt wird, das abgestimmt werden soll auf ein periodisch schwankendes Abtriebsdrehmoment, um den Wirkungsgrad zu erhöhen und einen besseren Rundlauf zu erzielen.

Fig. 9 zeigt eine schematische Darstellung einer Pumpe 900 mit druckseitigem Spiralgehäuse, wobei sich mit steigendem Zentriwinkel von der Gehäusezunge der Strömungsquerschnitt stetig bis zum Druckstutzen bzw. sich der Abstand zwischen dem Laufradaustritt und der radialen Druckkammerwand stetig bis zu einem Maximum am Druckstutzen erweitert, für ein Wäschepflegegerät gemäß einer beispielhaften Ausführungsform.

Die Pumpendruckkammer 901 ist hier wirkungsgradbedingt als Spiralgehäuse ausgeführt, bei dem der tangentiale Strömungsquerschnitt mit steigendem Zentriwinkel auch stetig zunimmt. Das Laufrad 904 mit einer beispielhaften Anzahl von sechs Laufradschaufeln 907 ist innerhalb der Pumpendruckkammer 901 angeordnet und fördert das Fluid von Fluideinlass, hier aus der Zeichenebene herauskommen, zum Fluidauslass 903. Die Verengungsstelle an der Gehäusezunge 910 ist hier am bzw. in Strömungsrichtung hinter dem Fluidausgang 903 (Pumpendruckstutzen) realisiert, wobei die Druckspitze beim Passieren der jeweiligen Laufradschaufeln 907 am Übergang zwischen Druckstutzen und der Gehäusezunge - also der Verengungsstelle 910 (Singularität oder auch Unstetigkeit) entsteht.

Fig. 10 zeigt eine dreidimensionale schräg-parallel-projizierte Darstellung einer einphasigen permanenterregten Synchronmaschine zum Antrieb eines Pumpenlaufrads gemäß einer beispielhaften Ausführungsform des elektrischen Antriebs.

Der Synchronmotor ist eine Einphasen- oder Drehstrom-Synchronmaschine im Motorbetrieb, bei der ein konstant magnetisierter Läufer (Rotor) 1002 synchron von einem bewegten magnetischen Drehfeld im Stator 1001 mitgenommen wird. Der laufende Synchronmotor hat eine zur Wechselspannung synchrone Bewegung. Die Drehzahl ist also über die Polpaarzahl mit der Frequenz der Wechselspannung verknüpft.

Prinzip bedingt tritt beim Synchronmotor kein Schlupf auf. Bei Belastung eilt das Läufermagnetfeld dem Statormagnetfeld um einen bestimmten Winkel, dem Polradwinkel nach, welcher mit steigender Belastung zunimmt. Unabhängig von dem Polradwinkel bedingten Phasenversatz zwischen Läufer- und Statormagnetfeld, der quasi das Drehmoment wiederspiegelt, rotieren die beiden Felder mit exakt derselben Drehzahl.

Einphasige permanenterregte Synchronmotoren benötigen eine Anlaufhilfe, die als Freilaufkupplung meist im Laufrad oder Rotor ausgebildet ist, um mit der schnell rotierenden Netzfrequenz unmittelbar "Schritt zu fassen". Da dieses "Schritt fassen" einphasiger Motoren im Startvorgang jedoch durch eine Drehschwingbewegungen mit wachsender Amplitude so weit vollzogen wird, dass sich die Drehschwingung an bzw. über die Grenzen von -π zu π erstreckt, kann die Drehrichtung für diesen Antrieb nicht vorhergesagt werden. Ganz im Gegenteil ist die Anlaufrichtung völlig willkürlich und teilt sich mit großer Stichprobentiefe zu einer Anlaufwahrscheinlichkeit von genau 50% zu %50 rechts-links Anläufen auf, so dass sich die Pumpendrehrichtung völlig undefiniert und zufällig einstellt. Solche einphasigen Synchronmotoren werden meist in Laugenpumpen wie z.B. oben zu Figur 5 beschrieben eingesetzt.

Der einphasige Synchronmotor 1000 umfasst einen mit elektrischen Wicklungen 1003 (Spulen) ausgestatteten Stator 1001 zum Aufbau eines rotierenden bzw. pulsierenden Magnetfeldes, wie oben zu den Figuren 3 und 4 beschrieben, zum Antreiben eines innerhalb des Stators 1001 frei rotierbaren magnetischen Rotors 1002, der ausgebildet ist, das Pumpenlaufrad 804 anzutreiben, wie oben zu Figur 8 beschrieben. Dadurch wirkt ein Drehmoment auf den Rotor 1002 ein, das abhängig von einem Drehwinkel des Rotors 1002 in Bezug auf die Wicklungen 1003 des Stators 1001 (hier als Winkel θ dargestellt) eine periodische Schwankung aufweist, entsprechend der Darstellung in den Figuren 1, 2a und 2b.

Der einphasige Synchronmotor 1000 ist so konstruiert, dass der Rotor 1002 mit dem Pumpenlaufrad 804 (siehe Figur 8) konstruktiv gekoppelt 806 ist, wobei die Kopplung 806 ausgebildet ist, bei einem Drehwinkel des Rotors 1002, bei welchem eine Spitze des Drehmoments 100 (siehe Figur 1) auftritt, eine Stellung des Pumpenlaufrads 804 zu bewirken, bei der die Druckspitze 504 im Fluid entsteht (siehe Figur 5).

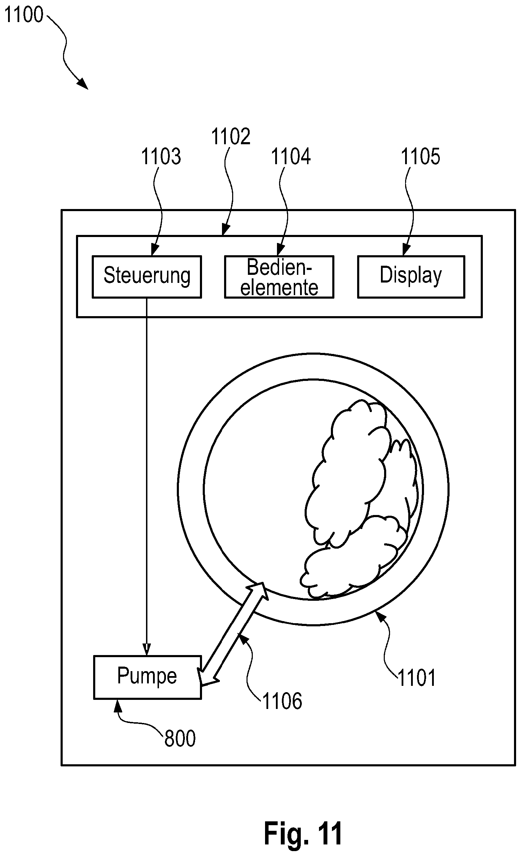

Fig. 11 zeigt eine schematische Darstellung eines Wäschepflegegeräts 1100 mit einer Pumpe 800 gemäß einer beispielhaften Ausführungsform.

Unter einem Wäschepflegegerät 1100 wird ein Gerät verstanden, welches zur Wäschepflege eingesetzt wird, wie z.B. eine Waschmaschine oder ein Wäschetrockner. Insbesondere wird unter solch einem Wäschepflegegerät ein Haushaltswäschepflegegerät verstanden. Also ein Wäschepflegegerät, welches im Rahmen der Haushaltsführung verwendet wird, und mit dem Wäsche in haushaltsüblichen Mengen behandelt wird.

Das Wäschepflegegerät 1100 umfasst eine Pumpe 800, beispielsweise entsprechend der Darstellung in Fig. 8. Das Wäschepflegegerät 1100 kann ferner eine Steuerung 1103 umfassen, welche dazu dient, die Pumpe 800 zu steuern oder sogar zu regeln. Ferner können neben der Steuerung 1103 Bedienelemente 1104 zur Bedienung des Wäschepflegegeräts 1100, meist über die Steuerung 1103 sowie ein Display 1105 zur Anzeige des Betriebszustands des Wäschepflegegeräts 1100 vorhanden sein. Steuerung 1103, Bedienelemente 1104 und Display 1105 können z.B. in (oder hinter) einem Armaturenbrett bzw. einer Bedienblende 1102 des Wäschepflegegeräts 1100 angeordnet sein.

Die Pumpe 800 kann beispielsweise so realisiert sein, wie oben zu den Figuren 5 bis 8 beschrieben. Diese Pumpe 800 umfasst: eine Pumpendruckkammer 801 mit Fluideinlass (Saugstutzen) 802 und Fluidauslass 803 (Druckstutzen); ein Pumpenlaufrad 804 mit in der Pumpenkammer 801 frei rotierbaren Laufradschaufeln 807, welches ausgebildet ist, das Fluid von dem Fluideinlass 802 zu dem Fluidauslass 803 zu fördern. Die Pumpendruckkammer 801 weist an dem Fluidauslass 803 eine Verengungsstelle 813 am Übergang zwischen Druckstutzen und der Gehäusezunge (Singularität oder auch Unstetigkeit) auf, wobei bei einer Vorbeibewegung einer jeweiligen Laufradschaufel 807 an der Verengungsstelle 813, wie in den Figuren 5 bis 8 dargestellt, eine Druckspitze 504 im Fluid entsteht. Die Pumpe umfasst ferner einen elektrischen Pumpenantrieb 805 mit einem mit elektrischen Wicklungen 809 ausgestatteten Stator 808 zum Aufbau eines rotierenden Magnetfeldes 312, 412 zum Antreiben eines innerhalb des Stators 808 frei rotierbaren magnetischen Rotors 812, der ausgebildet ist, das Pumpenlaufrad 804 anzutreiben, wobei ein Drehmoment 100, wie in Figur 1 dargestellt, auf den Rotor 812 einwirkt, das abhängig von einem Drehwinkel des Rotors 812 in Bezug auf die Wicklungen 809 des Stators 808 oder in Bezug auf den Stator 808 eine periodische Schwankung aufweist.

Die Pumpe 800 ist derart konstruiert, dass der Rotor 812 mit dem Pumpenlaufrad 804 konstruktiv gekoppelt 806 ist, wobei die Kopplung 806 ausgebildet ist, bei einem Drehwinkel des Rotors 812, bei welchem eine Spitze des Drehmoments 100 auftritt, eine Stellung des Pumpenlaufrads 804 zu bewirken, bei der die Druckspitze 504 im Fluid entsteht. Damit wird die eingangsseitig beschriebene Aufgabe der Erfindung gelöst.

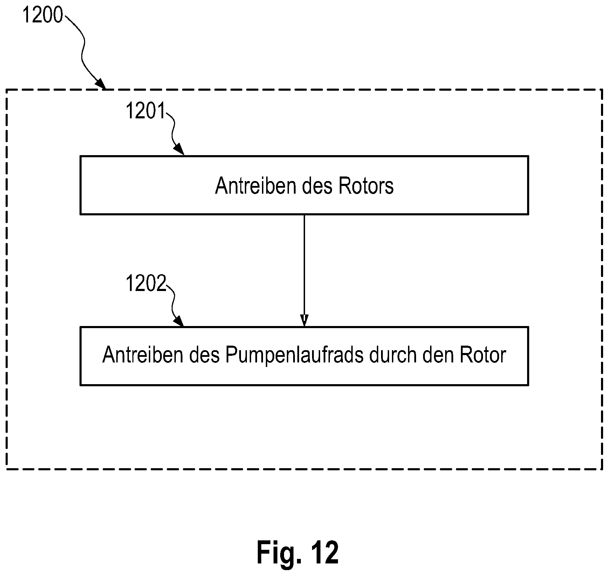

Fig. 12 zeigt eine schematische Darstellung eines Verfahrens 1200 zum Betreiben eines Wäschepflegegeräts 1100 mit einer Pumpe 800 gemäß einer beispielhaften Ausführungsform.

Die Pumpe kann gemäß der Beschreibung zu Figur 8 realisiert sein, d.h. umfassend eine Pumpendruckkammer 801 mit Fluideinlass 802 und Fluidauslass 803; ein Pumpenlaufrad 804 mit in der Pumpendruckkammer 801 frei rotierbaren Laufradschaufeln 807, wobei die Pumpendruckkammer 801 an dem Fluidauslass 803 eine Verengungsstelle 813 am Übergang zwischen Druckstutzen und der Gehäusezunge (Singularität oder auch Unstetigkeit) aufweist; einen elektrischen Pumpenantrieb 805 mit einem mit elektrischen Wicklungen 809 ausgestatteten Stator 808 zum Aufbauen eines rotierenden Magnetfeldes und einem innerhalb des Stators 808 frei rotierbaren magnetischen Rotor 812.

Das Verfahren umfasst die folgenden Schritte:

Antreiben 1201 des Rotors 812 durch das rotierende Magnetfeld des Stators 808, wobei ein Drehmoment 100 auf den Rotor 812 einwirkt, das abhängig von einem Drehwinkel des Rotors 812 in Bezug auf die Wicklungen 809 des Stators 808 eine periodische Schwankung aufweist; und

Antreiben 1202 des Pumpenlaufrads 804 durch den Rotor 812 zum Fördern des Fluids von dem Fluideinlass 802 zu dem Fluidauslass 803, wobei bei einer Vorbeibewegung einer jeweiligen Laufradschaufel 807 an der Verengungsstelle 813 am Übergang zwischen Druckstutzen und der Gehäusezunge (Singularität oder auch Unstetigkeit) der Pumpendruckkammer 801 eine Druckspitze 504 im Fluid entsteht.

Bei dem Verfahren 1200 ist die Pumpe 800 derart konstruiert, dass der Rotor 812 mit dem Pumpenlaufrad 804 konstruktiv gekoppelt 806 ist, so dass bei einem Drehwinkel des Rotors 812, bei welchem eine Spitze des Drehmoments 100 auftritt, das Pumpenlaufrad 804 sich in einer Stellung befindet, bei der die Druckspitze 504 im Fluid entsteht, wie zu Figur 5 beschrieben.

Der Schutzbereich der vorliegenden Erfindung ist durch die Ansprüche gegeben und wird durch die in der Beschreibung erläuterten oder den Figuren gezeigten Merkmale nicht beschränkt.

Bezugszeichenliste

| | |
|---|---|
| 100 | Antriebsdrehmoment |
| 200a | Eingangsstromphase |
| 200b | Drehmoment |
| 201 | idealer Stromverlauf |
| 202 | mit Welligkeit behafteter Strom |
| 203 | ideales Drehmoment |
| 204 | mit Welligkeit behaftetes Drehmoment |
| 300 | Laugenpumpenantrieb |
| 301 | Rahmen des Stators |
| 302 | Rotor |
| 304a | Zähne des Stators |
| 304b | Zähne des Stators |
| 304c | Zähne des Stators |
| 308 | Stator |
| 309a | Wicklungen des Stators |
| 309b | Wicklungen des Stators |
| 309c | Wicklungen des Stators |
| 310 | Feldlinien |
| 312 | rotierendes Magnetfeld |
| 410 | Feldlinien |
| 412 | rotierendes Magnetfeld |
| 500 | Strömungsgeschwindigkeit an Pumpe |
| 501 | Pumpenlaufrad |
| 502 | Schaufeln des Pumpenlaufrads |
| 503 | Strömungsvektoren in der Druckkammer |
| 504 | Druckspitze |
| 600 | Entleerungspumpe |
| 601 | Pumpendruckkammer |
| 602 | Fluideinlass |
| 603 | Fluidauslass (Druckstutzen) |
| 604 | Laufrad |
| 607 | Laufradschaufeln |
| 700 | Entleerungspumpe |
| 701 | Pumpenkammer, Pumpendruckkammer, Druckkammer |
| 703 | Druckstutzen am Fluidauslass |
| 704 | Laufrad |
| 707 | Laufradschaufeln |
| 800 | Pumpe |
| 801 | Pumpendruckkammer |
| 802 | Fluideinlass (Saugstutzen) |
| 803 | Fluidauslass (Druckstutzen) |
| 804 | Pumpenlaufrad |
| 805 | Pumpenantrieb |
| 806 | Kopplung, Achse, Welle |
| 807 | Laufradschaufeln |
| 808 | Stator |
| 809 | elektrische Wicklungen |
| 810 | Antriebsdrehmoment |
| 811 | Abtriebsdrehmoment |
| 812 | Rotor |
| 900 | Pumpe mit druckseitigem Spiralgehäuse |
| 901 | Pumpendruckkammer, Fluidkammer |
| 902 | Einlass (Saugstutzen) |
| 903 | Auslass (Druckstutzen) |
| 904 | Laufrad |
| 907 | Laufradschaufeln |
| 910 | Unstetigkeitsstelle, Singularität, Pumpengehäusezunge |
| 1000 | einphasige Synchronmaschine |
| 1001 | Stator |
| 1002 | Rotor |
| 1003 | Spulen, Wicklungen |
| 1100 | Wäschepflegegerät |
| 1101 | Trommel mit Wäsche |

1102 Armaturenbrett bzw. -konsole oder Bedienblende

1103 Steuerung

1104 Bedienelemente

1105 Display

1106 Pumpeneinlass/-auslass

1200 Verfahrens zum Betreiben eines Wäschepflegegeräts

1201 Erster Verfahrensschritt: Antreiben des Rotors

1202 Zweiter Verfahrensschritt: Antreiben des Pumpenlaufrads durch den Rotor

**Patentansprüche**

1. Pumpe (800) für ein Wäschepflegegerät, umfassend:

   eine Pumpendruckkammer (801) mit Fluideinlass (802) und Fluidauslass (803);
   ein in der Pumpendruckkammer (801) frei rotierbares Pumpenlaufrad (804) mit Laufradschaufeln (807), welches ausgebildet ist, das Fluid von dem Fluideinlass (802) zu dem Fluidauslass (803) zu fördern,
   wobei die Pumpendruckkammer (801) an dem Fluidauslass (803) eine Unstetigkeitsstelle (813) aufweist, so dass im Betrieb bei einer Vorbeibewegung einer jeweiligen Laufradschaufel (807) an der Unstetigkeitsstelle (813) am Übergang zwischen einem Druckstutzen und einer Pumpengehäusezunge der Pumpendruckkammer (801) eine Druckspitze (504) im Fluid entsteht;
   einen elektrischen Pumpenantrieb (805) mit einem mit elektrischen Wicklungen (809) ausgestatteten Stator (808) zum Aufbau eines rotierenden Magnetfeldes (312, 412) zum Antreiben eines bezüglich des Stators (808) frei rotierbaren magnetischen Rotors (812), der ausgebildet ist, das Pumpenlaufrad (804) anzutreiben, wobei ein Drehmoment (100) auf den Rotor (812) einwirkt, das abhängig von einem Drehwinkel des Rotors (812) in Bezug auf die Wicklungen (809) des Stators (808) eine periodische Schwankung aufweist,
   wobei der Rotor (812) mit dem Pumpenlaufrad (804) konstruktiv gekoppelt (806) ist, wobei die Kopplung (806) eine Fügestelle zwischen dem Rotor (812) und dem Pumpenlaufrad (804) aufweist,
   **dadurch gekennzeichnet, dass**
   die Kopplung (806) ausgebildet ist, bei einem Drehwinkel des Rotors (812), bei welchem eine Spitze des Drehmoments (100) auftritt, eine Stellung des Pumpenlaufrads (804) zu bewirken, bei der die Druckspitze (504) im Fluid entsteht,

und dass die Fügestelle entsprechend einer vorkonfigurierten Lagepositionierung ausgebildet ist.

2. Pumpe (800) nach Anspruch 1,
   **dadurch gekennzeichnet, dass**
   die Kopplung (806) ausgebildet ist, die Stellung des Pumpenlaufrads (804) basierend auf einer Wicklungsanordnung der Wicklungen (809) des Stators (808) zu bewirken.

3. Pumpe (800) nach Anspruch 1 oder 2,
   **dadurch gekennzeichnet, dass**
   die Kopplung (806) ausgebildet ist, die Stellung des Pumpenlaufrads (804) basierend auf einer Anzahl von magnetischen Polen, über die der Rotor (812) verfügt und/oder einer Anzahl von Zähnen und Strängen, über die der Stator (808) verfügt, zu bewirken.

4. Pumpe (800) nach einem der vorstehenden Ansprüche,

   wobei der Stator (808, 308) eine Mehrzahl von Zähnen (304a, 304b, 304c) aufweist, auf welche die Wicklungen (309a, 309b, 309c) aufgebracht sind,
   **dadurch gekennzeichnet, dass**
   die Kopplung (806) ausgebildet ist, die Stellung des Pumpenlaufrads (804) basierend auf einer Form und Anzahl der Zähne (304a, 304b, 304c) des Stators (308) und/oder einer Form der Laufradschaufeln (807) des Pumpenlaufrads (804) zu bewirken.

5. Pumpe (800) nach einem der vorstehenden Ansprüche,
   **dadurch gekennzeichnet, dass**
   die Kopplung (806) auf einer Anzahl an Polpaaren des elektrischen Pumpenantriebs (805) und einer Anzahl von Laufradschaufeln (807) des Pumpenlaufrads (804) basiert.

6. Pumpe (800) nach Anspruch 5,
   **dadurch gekennzeichnet, dass**
   die Anzahl an Polpaaren mit der Anzahl von Laufradschaufeln (807) oder einem ganzzahligen Vielfachen der Anzahl der Laufradschaufeln (807) übereinstimmt.

7. Pumpe (800) nach einem der vorstehenden Ansprüche,
   **dadurch gekennzeichnet, dass**
   die Kopplung (806) ausgebildet ist, eine Periode von Druckspitzen (504) im Fluid auf eine Periode der Drehmomentschwankung des Rotors (812) abzustimmen.

8. Pumpe (800) nach Anspruch 7,
**dadurch gekennzeichnet, dass**
die Kopplung (806) ausgebildet ist, eine Phase zwischen der Periode von Druckspitzen (504) im Fluid und der Periode der Drehmomentschwankung des Rotors (812) zu kompensieren.

9. Pumpe (800) nach einem der vorstehenden Ansprüche,
**dadurch gekennzeichnet, dass**
die Kopplung (806) ausgebildet ist, ein Abtriebsdrehmoment (811) des Fluids gegen ein Antriebsdrehmoment (810) des Rotors (812) zumindest teilweise zu kompensieren.

10. Pumpe (800) nach einem der vorstehenden Ansprüche,

wobei die Kopplung (806) als eine Welle zwischen dem Pumpenlaufrad (804) und dem Rotor (812) ausgebildet ist,
**dadurch gekennzeichnet, dass**
ein Drehwinkel des Rotors (812) bezüglich der Welle (806) und ein Drehwinkel des Pumpenlaufrads (804) bezüglich der Welle (806) einer vorgegebene Winkelbeziehung entsprechen.

11. Pumpe (800) nach einem der vorstehenden Ansprüche,
**dadurch gekennzeichnet, dass**
eine Magnetisierung des elektrischen Pumpenantriebs (805) auf eine Ausrichtung der Laufradschaufeln (807) des Pumpenlaufrads (804) abgestimmt ist.

12. Pumpe (800) nach einem der vorstehenden Ansprüche,
**dadurch gekennzeichnet, dass**
eine Form und Lage der Pumpengehäusezunge (710, 910) auf eine Magnetisierung des Rotors (812) und/oder des Stators (808) des elektrischen Antriebs (805) abgestimmt ist.

13. Wäschepflegegerät (1100) mit einer Pumpe (800) nach einem der vorstehenden Ansprüchen.

14. Verfahren (1200) zum Betreiben einer Pumpe (800 für ein Wäschepflegegerät, die Pumpe umfassend: eine Pumpendruckkammer (801) mit Fluideinlass (802) und Fluidauslass (803); ein Pumpenlaufrad (804) mit in der Pumpendruckkammer (801) frei rotierbaren Laufradschaufeln (807), wobei die Pumpendruckkammer (801) an dem Fluidauslass (803) eine Unstetigkeitsstelle (813) am Übergang zwischen einem Druckstutzen und einer Pumpengehäusezunge aufweist; einen elektrischen Pumpenantrieb (805) mit einem mit elektrischen Wicklungen (809) ausgestatteten Stator (808) zum Aufbauen eines rotierenden Magnetfeldes und einem bezüglich des Stators (808) frei rotierbaren magnetischen Rotor (812), wobei das Verfahren die folgenden Schritte umfasst:

Antreiben (1201) des Rotors (812) durch das rotierende Magnetfeld des Stators (808), wobei ein Drehmoment (100) auf den Rotor (812) einwirkt, das abhängig von einem Drehwinkel des Rotors (812) in Bezug auf die Wicklungen (809) des Stators (808) eine periodische Schwankung aufweist; und
Antreiben (1202) des Pumpenlaufrads (804) durch den Rotor (812) zum Fördern des Fluids von dem Fluideinlass (802) zu dem Fluidauslass (803), wobei bei einer Vorbeibewegung einer jeweiligen Laufradschaufel (807) an der Unstetigkeitsstelle (813) am Übergang zwischen dem Druckstutzen und der Pumpengehäusezunge der Pumpendruckkammer (801) eine Druckspitze (504) im Fluid entsteht,
wobei der Rotor (812) mit dem Pumpenlaufrad (804) konstruktiv gekoppelt (806) ist, so dass bei einem Drehwinkel des Rotors (812), bei welchem eine Spitze des Drehmoments (100) auftritt, das Pumpenlaufrad (804) sich in einer Stellung befindet, bei der die Druckspitze (504) im Fluid entsteht,
wobei die Kopplung (806) eine Fügestelle zwischen dem Rotor (812) und dem Pumpenlaufrad (804) aufweist, welche entsprechend einer vorkonfigurierten Lagepositionierung ausgebildet ist.

**Claims**

1. Pump (800) for a laundry care appliance, comprising:

a pump pressure chamber (801) with fluid inlet (802) and fluid outlet (803);
a pump impeller (804), which can be rotated freely in the pump pressure chamber (801), with impeller blades (807), which is embodied to convey the fluid from the fluid inlet (802) to the fluid outlet (803),
wherein at the fluid outlet (803) the pump pressure chamber (801) has a point of discontinuity (813) so that during operation a pressure peak (504) develops in the fluid with a passing movement of a respective impeller blade (807) at the point of discontinuity (813) at the transition between a pressure discharge nozzle and a pump housing tongue of the pump pressure chamber (801);
an electric pump drive (805) with a stator (808) equipped with electric windings (809) for establishing a rotating magnetic field (312, 412) for driving a magnetic rotor (812) which can be rotated freely with respect to the stator (808), said rotor being embodied to drive the pump impeller (804), wherein a torque (100) acts on the rotor (812) which has a periodic fluctuation as a function of an angle of rotation of the rotor (812) in respect of the windings (809) of the stator (808), wherein

the rotor (812) is coupled structurally with the pump impeller (804),
wherein the coupling (806) has a joint between the rotor (812) and the pump impeller (804),

**characterised in that**
with an angle of rotation of the rotor (812), at which a peak of the torque (100) occurs, the coupling (806) is embodied to bring about a position of the pump impeller (804) at which the pressure peak (504) develops in the fluid and that the joint is embodied according to a preconfigured positioning.

2. Pump (800) according to claim 1,
**characterised in that**
the coupling (806) is embodied to bring about the position of the pump impeller (804) on the basis of a winding arrangement of the windings (809) of the stator (808).

3. Pump (800) according to claim 1 or 2,
**characterised in that**
the coupling (806) is embodied to bring about the position of the pump impeller (804) on the basis of a number of magnetic poles which the rotor (812) has and/or a number of teeth and rods which the stator (808) has.

4. Pump (800) according to one of the preceding claims,

wherein the stator (808, 308) has a plurality of teeth (304a, 304b, 304c), to which the windings (309a, 309b, 309c) are attached,
**characterised in that**
the coupling (806) is embodied to bring about the position of the pump impeller (804) on the basis of a shape and number of teeth (304a, 304b, 304c) of the stator (308) and/or a shape of the impeller blades (807) of the pump impeller (804).

5. Pump (800) according to one of the preceding claims,
**characterised in that**
the coupling (806) is based on a number of pole pairs of the electrical pump drive (805) and a number of impeller blades (807) of the pump impeller (804).

6. Pump (800) according to claim 5,
**characterised in that**
the number of pole pairs matches the number of impeller blades (807) or a whole number multiple of the number of impeller blades (807).

7. Pump (800) according to one of the preceding claims,
**characterised in that**
the coupling (806) is embodied to match a period of pressure peaks (504) in the fluid with a period of torque fluctuation of the rotor (812).

8. Pump (800) according to claim 7,
**characterised in that**
the coupling (806) is embodied to compensate for a phase between the period of pressure peaks (504) in the fluid and the period of torque fluctuation of the rotor (812).

9. Pump (800) according to one of the preceding claims,
**characterised in that**
the coupling (806) is embodied to compensate for an output torque (811) of the fluid against a drive torque (810) of the rotor (812) at least in part.

10. Pump (800) according to one of the preceding claims,

wherein the coupling (806) is embodied as a shaft between the pump impeller (804) and the rotor (812),
**characterised in that**
an angle of rotation of the rotor (812) with respect to the shaft (806) and an angle of rotation of the pump impeller (804) with respect to the shaft (806) correspond to a predetermined angular relationship.

11. Pump (800) according to one of the preceding claims,
**characterised in that**
a magnetisation of the electric pump drive (805) is attuned to an alignment of the impeller blades (807) of the pump impeller (804).

12. Pump (800) according to one of the preceding claims,
**characterised in that**
a shape and position of the pump housing tongue (710, 910) is attuned to a magnetisation of the rotor (812) and/or the stator (808) of the electric drive (805).

13. Laundry care appliance (1100) with a pump (800) according to one of the preceding claims.

**14.** Method (1200) for operating a pump (800) for a laundry care appliance, the pump comprising: a pump pressure chamber (801) with fluid inlet (802) and fluid outlet (803); a pump impeller (804) with impeller blades (807) which can be rotated freely in the pump pressure chamber (801), wherein at the fluid outlet (803) the pump pressure chamber (801) has a point of discontinuity (813) at the transition between a pressure discharge nozzle and a pump housing tongue; an electric pump drive (805) with a stator (808) equipped with electric windings (809) for establishing a rotating magnetic field and a magnetic rotor (812) which can be rotated freely with respect to the stator (808), wherein the method comprises the following steps:

> driving (1201) the rotor (812) by means of the rotating magnetic field of the stator (808), wherein a torque (100) acts on the rotor (812), which has a periodic fluctuation as a function of an angle of rotation of the rotor (812) in respect of the windings (809) of the stator (808); and
> driving (1202) the pump impeller (804) by means of the rotor (812) in order to convey the fluid from the fluid inlet (802) to the fluid outlet (803), wherein a pressure peak (504) develops in the fluid with a passing movement of a respective impeller blade (807) at the point of discontinuity (813) at the transition between the pressure discharge nozzle and the pump housing tongue of the pump pressure chamber (801),
> wherein

>> the rotor (812) is coupled structurally (806) to the pump impeller (804), so that with an angle of rotation of the rotor (812), at which a peak of the torque (100) occurs, the pump impeller (804) is located in a position in which the pressure peak (504) occurs in the fluid,
>> wherein the coupling (806) has a joint between the rotor (812) and the pump impeller (804), which is embodied according to a preconfigured positioning.

**Revendications**

**1.** Pompe (800) pour un appareil d'entretien de linge, comprenant :

> une chambre de compression de la pompe (801) comprenant une entrée de fluide (802) et une sortie de fluide (803) ;
> une roue mobile de pompe (804) à rotation libre dans la chambre de compression de la pompe (801) munie de pales (807), laquelle est réalisée pour amener le fluide de l'entrée de fluide (802) à la sortie de fluide (803),
la chambre de compression (801) comprenant sur la sortie de fluide (803), un point de variabilité (813) de sorte qu'en fonctionnement, pendant le mouvement de passage d'une pale (807) respective sur le point de variabilité (813) à la jonction entre un raccord de tuyau et une languette de carter de pompe de la chambre de compression (801), la pression culmine (504) dans le fluide ;
un entraînement électrique de pompe (805) comprenant un stator (808) équipé de bobines électriques (809) pour la création d'un champ magnétique (312, 412) tournant pour l'entraînement d'un rotor (812) magnétique librement rotatif par rapport au stator (808) qui est réalisé pour entraîner la roue mobile de la pompe (804), s'en suit un moment de torsion (100) sur le rotor (812) qui présente, en fonction d'un angle de rotation du rotor (812) par rapport aux bobines (809) du stator (808), une oscillation périodique, le rotor (812) étant couplé (806) à la construction à la roue mobile de la pompe (804), le couplage (806) comprenant un point d'assemblage entre le rotor (812) et la roue mobile (804), **caractérisée en ce que**

> le couplage (806) est réalisé pour, à un angle de rotation du rotor (812), auquel survient le pic du moment de torsion (100), pour actionner une position de la roue mobile de pompe (804), à laquelle la pression culmine (504) dans le fluide et **en ce que** le point d'assemblage est réalisé pour correspondre à un positionnement préconfiguré.

**2.** Pompe (800) selon la revendication 1, **caractérisée en ce que**
le couplage (806) est réalisé pour actionner la position de la roue mobile (804) sur base de l'agencement des bobines (809) du stator (808).

**3.** Pompe (800) selon la revendication 1 ou 2, **caractérisée en ce que**
le couplage (806) est réalisé pour actionner la position de la roue mobile de pompe (804) sur base d'un nombre de pôles magnétiques dont dispose le rotor (812) et/ou d'un nombre de dents et de branches dont dispose le stator (808).

**4.** Pompe (800) selon l'une des revendications précédentes,

> dans laquelle le stator (808, 308) comprend une pluralité de dents (304a, 304b, 304c) auxquelles les bobines (309a, 309b, 309c) sont appliquées, **caractérisée en ce que**
> le couplage (806) est réalisé pour actionner la position de la roue mobile de pompe (804) sur base de la forme et du nombre de dents (304a, 304b, 304c) du stator (308) et/ou de la forme des pales de roue mobile (807) de la roue mobile de pompe (804).

5. Pompe (800) selon l'une des revendications précédentes, **caractérisée en ce que** le couplage (806) se base sur un nombre de paires de pôles de l'entraînement électrique de la pompe (805) et sur un nombre de pales de la roue mobile (807) de la roue mobile (804).

6. Pompe (800) selon la revendication 5, **caractérisée en ce que** le nombre de paires de pôles concorde avec le nombre de pales de roue mobile (807) ou avec le multiple entier du nombre des pales de roue mobile (807).

7. Pompe (800) selon l'une des revendications précédentes, **caractérisée en ce que** le couplage (806) est réalisé pour accorder une période de pics de pression (504) dans le fluide sur une période d'oscillation du moment de torsion du rotor (812).

8. Pompe (800) selon la revendication 7, **caractérisée en ce que** le couplage (806) est réalisé pour compenser une phase entre la période où culmine la pression (504) dans le fluide et la période de l'oscillation du moment de torsion du rotor (812).

9. Pompe (800) selon l'une des revendications précédentes, **caractérisée en ce que** le couplage (806) est réalisé pour compenser au moins partiellement un moment de torsion négatif (811) du fluide contre un moment de torsion d'entraînement (810) du rotor (812).

10. Pompe (800) selon l'une des revendications précédentes, dans laquelle le couplage (806) est réalisé en tant qu'arbre entre la roue mobile de pompe (804) et le rotor (812), **caractérisée en ce que** un angle de rotation du rotor (812) par rapport à l'arbre (806) et un angle de rotation de la roue mobile de pompe (804) par rapport à l'arbre (806) correspondent à un rapport d'angle prédéfini.

11. Pompe (800) selon l'une des revendications précédentes, **caractérisée en ce que** l'aimantation de l'entraînement électrique de pompe (805) est accordée sur l'orientation des pales (807) de la roue mobile de pompe (804).

12. Pompe (800) selon l'une des revendications précédentes, **caractérisée en ce que** la forme et la position de la languette de carter de pompe (710, 910) s'accorde sur l'aimantation du rotor (812) et/ou du stator (808) de l'entraînement électrique (805).

13. Appareil d'entretien de linge (1100) comprenant une pompe (800) selon l'une des revendications précédentes.

14. Procédé (1200) de fonctionnement d'une pompe (800) pour un appareil d'entretien de linge, la pompe comprenant : une chambre de compression de la pompe (801) comprenant une entrée de fluide (802) et une sortie de fluide (803), une roue mobile de pompe (804) comprenant des pales de roue mobile (807) à rotation libre dans la chambre de compression de la pompe (801), la chambre de compression (801) ayant, sur la sortie de fluide (803), un point de variabilité (813) à la jonction entre un raccord de tuyau et une languette de carter de pompe ; un entraînement électrique de pompe (805) comprenant un stator (808) équipé de bobines électriques (809) pour la création d'un champ magnétique (312, 412) rotatif et un rotor (812) magnétique librement rotatif par rapport au stator (808), dans lequel le procédé comporte les étapes suivantes :

entraînement (1201) du rotor (812) par le champ magnétique rotatif du stator (808), s'en suit un moment de torsion (100) sur le rotor (812) qui présente, en fonction d'un angle de rotation du rotor (812) par rapport aux bobines (809) du stator (808), une oscillation périodique, et entraînement (1202) de la roue mobile de pompe (804) par le rotor (812) pour amener le fluide de l'entrée de fluide (802) à la sortie de fluide (803), dans lequel, pendant le mouvement de passage d'une pale (807) respective sur le point de variabilité (813) à la jonction entre un raccord de tuyau et une languette de carter de pompe de la chambre de compression (801), la pression culmine (504) dans le fluide, le rotor (812) étant couplé (806) à la construction à la roue mobile de la pompe (804), de sorte qu'à un angle de rotation du rotor (812), auquel le moment de torsion (100) culmine, la roue mobile (804) se trouve dans une position où la pression culmine (504) dans le fluide, le couplage (806) comprenant un point d'assemblage entre le rotor (812) et la roue mobile (804), laquelle est réalisée conformément à un positionnement préconfiguré.

**Fig. 1**

200a

Eingangsstromphase U

201

202

**Fig. 2a**

200b

Drehmoment

203

204

**Fig. 2b**

**Fig. 3**

**Fig. 4**

Fig. 5

**Fig. 6**

**Fig. 7**

**Fig. 8**

Fig. 9

Fig. 10

**Fig. 11**

1200

1201

Antreiben des Rotors

1202

Antreiben des Pumpenlaufrads durch den Rotor

**Fig. 12**

**IN DER BESCHREIBUNG AUFGEFÜHRTE DOKUMENTE**

**In der Beschreibung aufgeführte Patentdokumente**

- JP 2005344601 A
- US 2005232795 A1